# EUROPÄISCHE PATENTSCHRIFT

(11) **EP 3 521 496 B1**
(45) Veröffentlichungstag und Bekanntmachung des Hinweises auf die Patenterteilung: **01.04.2020**
(21) Anmeldenummer: 18154430.5
(22) Anmeldetag: 31.01.2018
(51) Int. Cl.: D04H 1/4391, B32B 5/26, D04H 1/541, D04H 1/544, D04H 3/007

(54) **SPINNVLIESLAMINAT UND VERFAHREN ZUR ERZEUGUNG EINES SPINNVLIESLAMINATES**
NONWOVEN FABRIC LAMINATE AND METHOD FOR CREATING SAME
STRATIFIÉ NON-TISSÉ ET PROCÉDÉ DE FABRICATION D'UN STRATIFIÉ NON-TISSÉ

(43) Veröffentlichungstag der Anmeldung: 07.08.2019
(73) Patentinhaber: Reifenhäuser GmbH & Co. KG Maschinenfabrik, 53844 Troisdorf (DE); Fibertex Personal Care A/S, 9220 Aalborg (DK)
(72) Erfinder: SOMMER, Sebastian, 53844 Troisdorf (DE); WAGNER, Thomas, 50823 Köln (DE); LINKE, Gerold, 53773 Hennef (DE); BOHL, Patrick, 53840 Troisdorf (DE); HANSEN, Morton Rise, 9000 Aalborg (DK)
(74) Vertreter: Andrejewski - Honke Patent- und Rechtsanwälte Partnerschaft mbB

(56) Entgegenhaltungen:
- EP-A1- 1 369 518
- EP-A1- 1 630 265
- EP-A1- 3 054 042
- EP-A1- 3 121 314
- WO-A1-00/28123

## Beschreibung

Die Erfindung betrifft ein Spinnvlieslaminat mit einer Mehrzahl von übereinander angeordneten Spinnvlieslagen, wobei Spinnvlieslagen gekräuselte Endlosfilamente aufweisen bzw. aus gekräuselten Endlosfilamenten bestehen. Die Erfindung bezieht sich fernerhin auf ein Verfahren sowie auf eine Vorrichtung zur Erzeugung eines solchen Spinnvlieslaminates. - Spinnvlies meint im Rahmen der Erfindung insbesondere ein nach dem Spunbond-Verfahren hergestelltes Spunbond-Vlies. Endlosfilamente unterscheiden sich aufgrund ihrer quasi endlosen Länge von Stapelfasern, die viel geringere Längen von beispielsweise 10 mm bis 60 mm aufweisen. Bei den im Rahmen der Erfindung eingesetzten Endlosfilamenten handelt es sich insbesondere um Endlosfilamente aus thermoplastischem Kunststoff.

Spinnvlieslaminate der vorstehend genannten Art sind aus der Praxis grundsätzlich in verschiedenen Ausführungsformen bekannt. - Bei den bekannten Spinnvliesen treten häufig Probleme auf, wenn ein Spinnvlies einerseits mit geringem Flächengewicht und andererseits mit großer Dicke bzw. hohem Volumen hergestellt werden soll. Hohe Dicken werden in der Regel durch einen hohen Kräuselungsgrad der Filamente erzielt. Dadurch entsteht aber ein relativ anfälliges Aggregat in Bezug auf mechanische Einflüsse bzw. Kräfte. So neigen die stark gekräuselten Fasern bei mechanischen Einwirkungen zum Öffnen der Kräuselschlaufen. Dann kann ein nachteilhaft inhomogenes Vlies resultieren. - Vliese bzw. Vlieslaminate werden normalerweise auf einem Ablageband abgelegt und von diesem Ablageband an einen Kalander übergeben. Die dabei auf das Vlies bzw. Vlieslaminat einwirkenden Kräfte können Verschiebungen bzw. Verzerrungen in dem Vlies bzw. an der Vliesoberfläche hervorrufen, so dass eine unerwünschte Inhomogenität des Vlieses bzw. des Vlieslaminates resultiert. Deshalb müssen die Geschwindigkeiten der Ablagevorrichtung einerseits und des Kalanders andererseits aufeinander abgestimmt werden. Nichtsdestoweniger verbleibt ein Zielkonflikt zwischen einer hohen Vliesdicke bzw. Laminatdicke und einer zügigen und funktionssicheren Übergabe zwischen Ablageband und Kalander.

In diesem Zusammenhang tritt ein Problem insbesondere auch bei Mehrbalken-Anlagen auf, in denen beispielsweise mehrere Spunbond-Balken oder ein Spunbond-Balken, ein Meltblown-Balken und wiederum ein Spunbond-Balken hintereinander geschaltet sind. Um ein bestimmtes Flächengewicht des resultierenden Vlieslaminates einzuhalten ist man bestrebt die Flächengewichte der einzelnen Lagen zu reduzieren. Dadurch werden die Filamentlagen aber empfindlicher und zwar insbesondere auch gegenüber einer Saugluftbeaufschlagung auf dem Ablageband bzw. Ablagesiebband. Insbesondere die untere Lage eines solchen Vlieslaminates kann durch die Saugluft so beaufschlagt werden, dass Filamente in die Zwischenräume des Siebbandes eingesaugt werden. Das macht die Übergabe zwischen Ablageband und Kalander schwieriger. Um die diesbezüglichen Probleme gering zu halten wird in der Praxis die Dicke bzw. die Voluminösität der einzelnen Lagen eher reduziert und somit auch die Kräuselung reduziert.

Im Ergebnis mussten bei den bislang bekannten Maßnahmen zur Erzeugung relativ voluminöser Vlieslaminate unerwünschte Inhomogenitäten in Kauf genommen werden und/oder nachteilhafte Kompromisse zu Lasten der Voluminösität eingegangen werden.

Man hat bereits erfolgreich versucht die vorstehend genannten Probleme zu lösen (EP 3 054 042 A1). Im Rahmen der insoweit bekannten Maßnahmen besteht die untere Lage eines Vlieslaminates aus nicht kräuselnden oder nur sehr wenig kräuselnden Filamenten, während die obere bzw. die oberen Lagen aus kräuselnden bzw. stärker kräuselnden Filamenten bestehen. Nichtsdestoweniger gibt es hier noch Verbesserungsmöglichkeiten.

Aus EP 1 369 518 A1 ist weiterhin ein Spinnvlieslaminat aus zumindest zwei Spinnvlieslagen bekannt. Dabei können die Spinnvlieslagen des Laminates einen unterschiedlichen Kräuselungsgrad aufweisen. Dieses Spinnvlieslaminat hat sich im Hinblick auf die Kombination einer hohen Dicke einerseits und einer ausreichenden Stabilität andererseits nicht bewährt.

Der Erfindung liegt das technische Problem zugrunde, ein Spinnvlieslaminat der eingangs genannten Art bzw. ein Verfahren und eine Vorrichtung zur Herstellung eines solchen Spinnvlieslaminates anzugeben, bei dem das Spinnvlieslaminat eine hohe Dicke bzw. ein hohes Volumen bei verhältnismäßig hohem Kräuselgrad der Filamente aufweist, bei dem nichtsdestoweniger eine hohe Homogenität und Stabilität der einzelnen Lagen gewährleistet ist und das insbesondere auf einfache Weise transportiert und übergeben werden kann, vor allem von einem Ablageband zu einem Kalander problemlos übergeben werden kann. Dieses Problem soll insbesondere auch für Spinnvlieslagen bzw. Spinnvlieslaminate mit geringeren Flächengewichten effektiv gelöst werden.

Zur Lösung dieses technischen Problems lehrt die Erfindung zunächst ein Spinnvlieslaminat mit einer Mehrzahl von übereinander angeordneten Spinnvlieslagen, wobei zumindest zwei und maximal vier Spinnvlieslagen gekräuselte Endlosfilamente aufweisen bzw. aus gekräuselten Endlosfilamenten bestehen,
wobei der Kräuselungsgrad der Filamente in diesen Spinnvlieslagen jeweils unterschiedlich ist, wobei die gekräuselten Filamente der Spinnvlieslagen jeweils eine Kräuselung mit mindestens drei und bevorzugt mit mindestens vier Schlingen (loops) pro Zentimeter ihrer Länge aufweisen,
und wobei die gekräuselten Filamente der Spinnvlieslagen als Multikomponentenfilamente, insbesondere als Bikomponentenfilamente, mit einer ersten Kunststoffkomponente und einer zweiten Kunststoffkomponente ausgebildet sind, wobei jede der beiden Kunststoffkomponenten zu mindestens 10 Gew.-%, vorzugsweise zu mindestens 15 Gew.-% in dem jeweiligen Filament vorhanden ist,
wobei der Kräuselungsgrad einer unteren Spinnvlieslage der übereinander angeordneten Spinnvlieslagen geringer ist als der Kräuselungsgrad zumindest einer darüber angeordneten Spinnvlieslage
und wobei die zweite Kunststoffkomponente eine Mischung bzw. ein Blend aus zumindest einem zweiten Kunststoff und zumindest einem dritten Kunststoff aufweist bzw. ist und wobei der Anteil des dritten Kunststoffes - bezogen auf das gesamte Filament - weniger als 25 Gew.-% beträgt.

Eine ganz besonders bevorzugte Ausführungsform der Erfindung ist dadurch gekennzeichnet,
- dass die Schmelzflussrate der ersten Komponente 1 bis 3 mal, bevorzugt 1,2 bis 1,5 mal größer ist als die Schmelzflussrate der zweiten Komponente
- und/oder dass die Molekulargewichtsverteilung (M_{w}/Mₙ oder M_{z}/M_{w}) der ersten Komponente enger ist als die Molekulargewichtsverteilung der zweiten Komponente und/oder der M_{w}/Mₙ-Wert oder M_{z}/M_{w}-Wert der zweiten Komponente mindestens 1,1 mal größer ist als die/der der ersten Komponente
- und/oder dass die Schmelzpunktdifferenz zwischen der ersten und der zweiten Komponente mindestens 10 °C beträgt.

Besonders bewährt hat sich im Rahmen der Erfindung eine Ausführungsform, bei der die Differenz zwischen den Flächengewichten der Spinnvlieslagen mit gekräuselten Filamenten weniger als 25 %, vorzugsweise weniger als 15 % und bevorzugt weniger als 10 % beträgt. Gemäß besonders bevorzugter Ausführungsform der Erfindung beträgt die Differenz zwischen den Flächengewichten der Spinnvlieslagen mit gekräuselten Filamenten maximal 5 % und bevorzugt sind die Flächengewichte der Spinnvlieslagen mit gekräuselten Filamenten gleich bzw. in etwa gleich.

In dem erfindungsgemäßen Spinnvlieslaminat werden somit zwei bis vier Spinnvlieslagen mit gekräuselten Endlosfilamenten bzw. aus gekräuselten Endlosfilamenten eingesetzt und der Kräuselungsgrad der Filamente ist zweckmäßigerweise in allen Spinnvlieslagen unterschiedlich. Dabei weisen die gekräuselten Filamente dieser Spinnvlieslagen erfindungsgemäß jeweils eine Kräuselung mit mindestens drei Schlingen (loops) pro Zentimeter ihrer Länge auf. Nach einer empfohlenen Ausgestaltung der Erfindung weisen die gekräuselten Filamente jeweils eine Kräuselung mit mindestens vier Schlingen und nach einer anderen bevorzugten Ausbildung eine Kräuselung mit mindestens fünf Schlingen pro Zentimeter ihrer Länge auf.

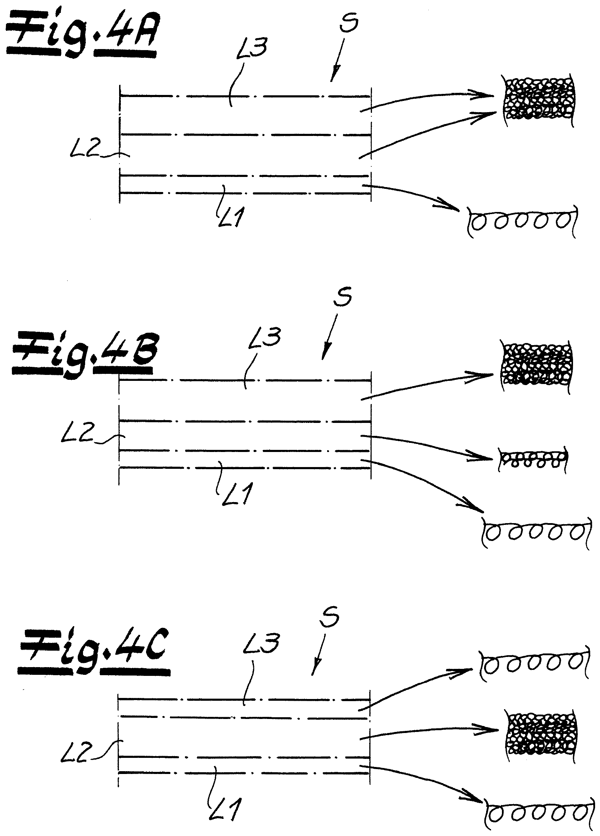

Die Anzahl der Kräuselschlingen bzw. Kräuselbögen (loops) pro Zentimeter Länge der Filamente wird dabei insbesondere nach der japanischen Norm JIS L - 1015 - 1981 gemessen, indem die Kräuselungen unter einer Vorspannung von 2 mg/den in (1/10 mm) gezählt werden, wobei die ausgestreckte Länge der Filamente zugrunde liegt. Es wird eine Empfindlichkeit von 0,05 mm verwendet, um die Anzahl der Kräuselschlingen zu bestimmen. Die Messung wird zweckmäßigerweise durchgeführt mit einem "Favimat" - Gerät der Firma TexTechno, Deutschland. Dazu wird auf die Veröffentlichung "Automatic Crimp Measurement on Staple Fibres", Denkendorf Kolloquium, "Textile Mess- und Prüftechnik", 9.11.99, Dr. Ulrich Mörschel (insbesondere S. 4, Fig. 4) verwiesen. Die Filamente (bzw. die Filamentprobe) werden/wird hierzu als Filamentknäuel vor einer weiteren Verfestigung von der Ablage bzw. vom Ablageband abgenommen und die Filamente werden vereinzelt und gemessen.

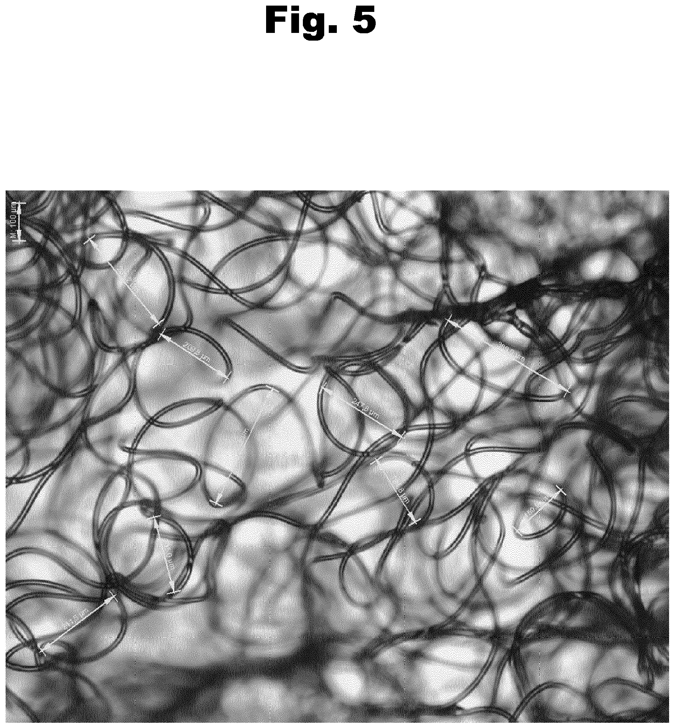

Erfindungsgemäß ist der Kräuselungsgrad einer unteren Spinnvlieslage der übereinander angeordneten Spinnvlieslagen (mit gekräuselten Filamenten) geringer als der Kräuselungsgrad zumindest einer darüber angeordneten Spinnvlieslage. Eine empfohlene Ausführungsform zeichnet sich dadurch aus, dass bei einem Spinnvlieslaminat mit zumindest drei Spinnvlieslagen mit gekräuselten Filamenten der Kräuselungsgrad der Filamente von der untersten Spinnvlieslage (mit gekräuselten Filamenten) zu der oberen (dritten) Spinnvlieslage (mit gekräuselten Filamenten) zunimmt. Eine ganz besonders bevorzugte Ausführungsform der Erfindung ist dadurch gekennzeichnet, dass der Kräuselungsgrad aller übereinander angeordneten Spinnvlieslagen (mit gekräuselten Filamenten) von unten nach oben zunimmt. Zunahme des Kräuselungsgrades der Filamente meint im Rahmen der Erfindung insbesondere eine Zunahme der Kräuselungen pro Zentimeter Filamentlänge und/oder eine Abnahme des Kräuselungsdurchmessers bzw. Schlingendurchmessers (Loopdurchmessers). Mit anderes Worten steigt der Kräuselungsgrad mit zunehmender Schlingenanzahl (Loopanzahl) pro Zentimeter Filamentlänge und/oder mit abnehmenden Schlingendurchmesser (Loopdurchmesser) der Filamente. Der Schlingendurchmesser (Loopdurchmesser) wird dabei zweckmäßigerweise wie folgt gemessen: Der zu vermessende Vliesstoff wird unter einem Mikroskop platziert und unter Verwendung einer geeigneten Vergrößerung wird ein Standbild erzeugt und darin kann der Schlingendurchmesser (Loopdurchmesser) gemessen werden. Beispielsweise wurde die in Fig. 5 gezeigte Abbildung unter Benutzung eines "5x"-Objektives eines Olympus BX51-Mikroskopes mit einer USB-Kamera aufgenommen.

Bei Spinnvlieslaminaten mit mehreren Lagen muss das optische System jeweils auf die Oberfläche jeder sichtbaren Lage fokussiert werden, so dass die weiteren Oberflächen bzw. Lagen so weit wie möglich außerhalb der Tiefenschärfe liegen. Aufgrund der zufälligen Verteilung der Filamente bzw. der zufälligen Verteilung der Loopdurchmesser sind jeweils mindestens 25 Messungen erforderlich. Es wird der arithmetische Mittelwert angegeben.

Es wurde bereits dargelegt, dass nach einer bevorzugten Ausführungsform der Erfindung der Kräuselungsgrad der übereinander angeordneten Spinnvlieslagen (mit gekräuselten Filamenten) von unten nach oben zunimmt. Gemäß einer alternativen Ausführungsvariante der Erfindung weist das erfindungsgemäße Spinnvlieslaminat zumindest drei Spinnvlieslagen mit gekräuselten Filamenten auf, wobei zumindest zwei untere Spinnvlieslagen einen von unten nach oben ansteigenden Kräuselungsgrad aufweisen, während die zumindest eine obere Spinnvlieslage wiederum einen geringeren Kräuselungsgrad aufweist als die mittlere Spinnvlieslage. - Es liegt im Übrigen im Rahmen der Erfindung, dass in dem erfindungsgemäßen Spinnvlieslaminat zwischen den Spinnvlieslagen mit gekräuselten Filamenten auch Meltblown-Lagen aus Meltblown-Filamenten und/oder Spinnvlieslagen aus nicht gekräuselten Filamenten angeordnet sein können. Ein solches Laminat kann dann beispielsweise aus drei Lagen Spinnvlies mit gekräuselten Filamenten und zwei Lagen Meltblown-Vlies aus nicht gekräuselten Filamenten bestehen (z. B. in SSMMS- oder auch in SMMSS-Anordnung). Gemäß einer empfohlenen Ausführungsform der Erfindung weist das erfindungsgemäße Spinnvlieslaminat lediglich Spinnvlieslagen mit gekräuselten Filamenten auf.

Erfindungsgemäß sind die gekräuselten Filamente der Spinnvlieslagen als Multikomponentenfilamente, insbesondere als Bikomponentenfilamente, mit einer ersten und einer zweiten Kunststoffkomponente ausgebildet. - Es liegt im Rahmen der Erfindung, dass die gekräuselten Multikomponentenfilamente bzw. die gekräuselten Bikomponentenfilamente eine side-by-side-Konfiguration aufweisen und/oder eine azentrische Kern-Mantel-Konfiguration. Grundsätzlich können auch andere kräuselbare Konfigurationen von Multikomponentenfilamenten bzw. Bikomponentenfilamenten eingesetzt werden (z. B. island-inthe-sea). - Nach sehr bevorzugter Ausführungsform der Erfindung ist die Schmelzflussrate einer ersten Komponente der Bikomponenenfilamente bzw. Multikomponentenfilamente zum einen 1,05 bis 3 mal, bevorzugt 1,2 bis 1,5 mal größer als die Schmelzflussrate einer zweiten Komponente und die Molekulargewichtsverteilung (M_{w}/Mₙ oder M_{z}/M_{w}) der ersten Komponente ist enger als die Molekulargewichtsverteilung der zweiten Komponente und dabei ist die Molekulargewichtsverteilung bzw. der M_{w}/Mₙ-Wert oder der M_{z}/M_{w}-Wert der zweiten Komponente mindestens 1,1 mal größer als der der ersten Komponente.

Erfindungsgemäß weist die erste Kunststoffkomponente einen ersten Kunststoff auf bzw. besteht die erste Kunststoffkomponente aus zumindest einem ersten Kunststoff und die zweite Kunststoffkomponente ist eine Mischung bzw. ein Blend aus zumindest einem zweiten Kunststoff und zumindest einem dritten Kunststoff. - Das Massenverhältnis der ersten Kunststoffkomponente zur zweiten Kunststoffkomponente beträgt zweckmäßigerweise 50:50 bis 95:5, vorzugsweise 50:50 bis 90:10, insbesondere 60:40 bis 90:10 und sehr bevorzugt 70:30 bis 80:20.

Es liegt im Rahmen der Erfindung, dass die zweite Kunststoffkomponente eine Mischung bzw. ein Blend aus zumindest einem zweiten Kunststoff und zumindest einem dritten Kunststoff aufweist bzw. ist. Nach besonders bevorzugter Ausführungsform der Erfindung ist dabei die Molekulargewichtsverteilung des dritten Kunststoffes breiter als die Molekulargewichtsverteilung des ersten Kunststoffes und/oder breiter als die Molekulargewichtsverteilung des zweiten Kunststoffes. Gemäß einer Ausführungsvariante ist die Molekulargewichtsverteilung des dritten Kunststoffes sowohl breiter als die Molekulargewichtsverteilung des ersten Kunststoffes als auch breiter als die Molekulargewichtsverteilung des zweiten Kunststoffes. Die Molekulargewichtsverteilung wird insbesondere nach ASTM D1238-13 gemessen.

Eine bevorzugte Ausführungsform der Erfindung zeichnet sich dadurch aus, dass der zumindest eine erste Kunststoff und/oder der zumindest eine zweite Kunststoff und/oder der zumindest eine dritte Kunststoff ein Polyolefin bzw. ein Homo-Polyolefin und/oder ein Polyolefin-Copolymer ist. - Eine ganz besonders empfohlene Ausführungsform, der im Rahmen der Erfindung besondere Bedeutung zukommt, ist dadurch gekennzeichnet, dass der erste Kunststoff und/oder der zweite Kunststoff und/oder der dritte Kunststoff ein Polypropylen bzw. ein Homo-Polypropylen und/oder ein Polypropylen-Copolymer ist. Gemäß einer sehr bewährten Ausführungsform der Erfindung ist sowohl der erste Kunststoff als auch der zweite Kunststoff und auch der dritte Kunststoff ein Polypropylen (Homo-Polypropylen) und/oder ein Polypropylen-Copolymer und/oder eine Mischung aus einem Polypropylen (Homo-Polypropylen) und einem Polypropylen-Copolymer. Dabei sind vorzugsweise die vorgenannten Molekulargewichtsverteilungen der Kunststoffe realisiert. Bei Messung der Molekulargewichtsverteilungen der Polypropylen-Kunststoffe nach ASTM D1238-13 wird als Lösungsmittel für den Polypropylen-Kunststoff zweckmäßigerweise Trichlorbenzol eingesetzt und die Messung an der Lösung erfolgt bei einer Temperatur von 160 °C, wobei die Konzentration 1,5 g/l beträgt und als Sensor ein IR-Sensor eingesetzt wird. Die bei der Messung eingesetzten Säulen werden mit Polystyrol-Standards kalibriert, wobei die Messergebnisse auf "Polypropylen" umgerechnet werden und zwar unter Anwendung der Mark Houwink-Gleichung. Dabei wird zweckmäßigerweise mit folgendem Parameter-Satz gearbeitet: Polystyrol: α = 0,7 ; K = 0,0138 mL/g Polypropylen: α = 0,707 ; K = 0,0242 mL/g.

Erfindungsgemäß weist die zweite Kunststoffkomponente eine Mischung bzw. ein Blend aus zumindest einem zweiten Kunststoff und zumindest einem dritten Kunststoff auf. Dabei beträgt der Anteil des dritten Kunststoffes - bezogen auf das gesamte Filament - weniger als 25 Gew.-%.

Es liegt im Rahmen der Erfindung, dass die Schmelzflussrate (MFR) der ersten Komponente 1,0 bzw. 1,05 bis 3 mal, bevorzugt 1,2 bis 1,5 mal größer ist als die Schmelzflussrate der zweiten Komponente. Zweckmäßigerweise ist nach entsprechend bevorzugter Ausführungsform der Erfindung die Schmelzflussrate der ersten Kunststoffkomponente höher als die Schmelzflussrate einer Mischung bzw. eines Blends aus dem zweiten und dem dritten Kunststoff (zweite Kunststoffkomponente). Dabei ist die Schmelzflussrate der ersten Kunststoffkomponente zweckmäßigerweise um mindestens 20 % höher als die Schmelzflussrate der Mischung bzw. des Blends aus dem zweiten und dem dritten Kunststoff. - Im Rahmen der erfindungsgemäßen Lehre wird die Schmelzflussrate (MFR) insbesondere nach ASTM D1238-13 gemessen (Bedingung B, 2,16kg, 230°C) und zwar in Gramm des Polymers pro 10 Minuten (g/10 min.). Die Schmelzflussrate von Mischungen bzw. Blends werden bestimmt durch Messung der Schmelzflussrate des Polypropylens und durch Verwendung einer Logarithmen-Kalkulation zur Berechnung der Schmelzflussrate des Blends.

Nach besonders bevorzugter Ausführungsform der Erfindung handelt es sich bei dem erfindungsgemäßen Spinnvlieslaminat um ein durch Kalandrieren verfestigtes Laminat. Bei dem bevorzugten Einsatz von Polyolefinen, insbesondere von Polypropylen für die Kunststoffe des Spinnvlieslaminates wird vorzugsweise eine Kalanderverfestigung mit einer Kalandertemperatur zwischen 100 und 160°C, bevorzugt zwischen 110 und 150°C durchgeführt.

Eine empfohlene Ausführungsform des erfindungsgemäßen Spinnvlieslaminates ist dadurch gekennzeichnet, dass das Laminat eine Dicke von 0,1 bis 0,9 mm, vorzugsweise von 0,15 bis 0,85 mm bevorzugt von 0,2 bis 0,8 mm und gemäß einer Ausgestaltung der Erfindung von 0,3 bis 0,6 mm aufweist. Eine sehr bewährte Ausführungsform der Erfindung zeichnet sich dadurch aus, dass das erfindungsgemäße Spinnvlieslaminat eine spezifische Dicke von 0,6 bis 3,2 mm/100 gsm, vorzugsweise eines spezifische Dicke von 0,8 bis 3 mm/100 gsm und sehr bevorzugt eine spezifische Dicke von 1,0 bis 2,8 mm/100 gsm aufweist. Die Abkürzung gsm steht dabei für g/m².

Gemäß sehr bevorzugter Ausführungsform beträgt die Feinheit (Titer), der gekräuselten Filamente in dem Laminat 0,7 bis 3,2 den, vorzugsweise 0,8 bis 3 den und zwar zweckmäßigerweise in allen Spinnvlieslagen mit gekräuselten Filamenten. - Es liegt im Rahmen der Erfindung, dass das Flächengewicht des erfindungsgemäßen Spinnvlieslaminates zwischen 10 und 50 g/m² und bevorzugt zwischen 10 und 40 g/m² liegt. - Für die im Rahmen der Erfindung eingesetzten Filamente sind grundsätzlich verschiedene Querschnittsausgestaltungen möglich. Sie können insbesondere im Querschnitt rund, dreieckig oder rechteckig ausgebildet sein. Die gekräuselten Filamente können hohlraumfrei bzw. im Wesentlichen hohlraumfrei ausgestaltet sein oder aber auch als Hohlfasern ausgebildet sein.

Ganz besonders relevante Bedeutung kommt im Rahmen der Erfindung dem Verfahren zur Erzeugung eines erfindungsgemäßen Spinnvlieslaminates zu. Insoweit ist Gegenstand der Erfindung ein Verfahren zur Erzeugung eines Laminates mit einer Mehrzahl von übereinander angeordneten Spinnvlieslagen, wobei zumindest zwei und maximal vier dieser Spinnvlieslagen mit bzw. aus gekräuselten Endlosfilamenten mit der Maßgabe erzeugt werden, dass der Kräuselungsgrad der Endlosfilamente in diesen Spinnvlieslagen unterschiedlich ist,
wobei die gekräuselten Filamente der Spinnvlieslagen als Multikomponentenfilamente, insbesondere als Bikomponentenfilamente, mit einer ersten Kunststoffkomponente und einer zweiten Kunststoffkomponente hergestellt werden, wobei jede dieser beiden Komponente zu mindestens 10 Gew.-%, vorzugsweise zu mindestens 15 Gew.-% in dem jeweiligen Filament vorhanden ist,
wobei für die Filamente zumindest einer Spinnvlieslage mit gekräuselten Filamenten, vorzugsweise mehrerer Spinnvlieslagen mit gekräuselten Filamenten und bevorzugt aller Spinnvlieslagen mit gekräuselten Filamenten, der Anteil bzw. die Zusammensetzung der ersten Kunststoffkomponente und/oder der zweiten Kunststoffkomponente im Verfahrensbetrieb (online) zur Variierung des Kräuselungsgrades eingestellt wird,
und wobei den Kunststoffkomponenten bzw. den Kunststoffen für eine Spinnvlieslage jeweils eine Dosiereinrichtung zugeordnet ist und wobei die Kunststoffkomponentenzufuhr bzw. die Kunststoffzufuhr durch zumindest eine Dosiereinrichtung im laufenden Betrieb online zur Variierung des Kräuselungsgrades der Spinnvlieslage verändert wird.

Eine besonders bevorzugte Ausführungsform des erfindungsgemäßen Verfahrens ist dadurch gekennzeichnet,
- dass die Schmelzflussrate der ersten Komponente 1 bis 3 mal, bevorzugt 1,2 bis 1,5 mal größer ist als die Schmelzflussrate der zweiten Komponente
- und/oder dass die Molekulargewichtsverteilung (M_{w}/Mₙ oder M_{z}/M_{w}) der ersten Komponente enger ist als die Molekulargewichtsverteilung der zweiten Komponente und/oder der M_{w}/Mₙ-Wert oder der M_{z}/M_{w}-Wert der zweiten Komponente vorzugsweise mindestens 1,1 mal größer ist als die/der der ersten Komponente
- und/oder dass die Schmelzpunktdifferenz zwischen der ersten und der zweiten Komponente mindestens 10 °C beträgt.

Der Einstellung des Anteils der Kunststoffkomponenten im Verfahrensbetrieb bzw. der Online-Einstellung des Anteils der Kunststoffkomponenten kommt im Rahmen der Erfindung ganz besonders wesentliche Bedeutung zu. Einstellung im Verfahrensbetrieb bzw. Online-Einstellung meint zunächst insbesondere, dass der Verfahrensbetrieb für die Einstellung der Komponentenanteile bzw. der Kunststoffanteile nicht unterbrochen wird und die Einstellung der Komponentenanteile bzw. Kunststoffanteile somit im laufenden Verfahrensbetrieb erfolgt und vorzugsweise kontinuierlich erfolgt.

Erfindungsgemäß ist den Kunststoffkomponenten bzw. den Kunststoffen für die Spinnvlieslagen aus gekräuselten Filamenten jeweils eine Dosiereinrichtung - insbesondere eine Dosierschnecke und/oder Dosierpumpe und/oder eine Spinnpumpe - zugeordnet und die Komponentenzufuhr bzw. Kunststoffzufuhr wird durch zumindest eine Dosiereinrichtung im laufenden Betrieb (online) variiert, insbesondere durch Veränderung der Drehzahl der Dosiereinrichtung. Aufgrund dieser Variiermöglichkeit kann der Kräuselungsgrad einer Spinnvlieslage im Online-Betrieb quasi frei variiert werden und beispielsweise bei Bedarf von einem geringen Kräuselungsgrad zu einem hohen Kräuselungsgrad hin verändert werden. Wenn der Kräuselungsgrad mehrerer Spinnvlieslagen oder aller Spinnvlieslagen mit gekräuselten Filamenten verändert werden soll, erfolgt zweckmäßigerweise bei der zur Erzeugung des Spinnvlieslaminates eingesetzten Mehrbalkenanlage eine gleichzeitige Variierung bzw. Online-Variierung an allen Spinnbalken bzw. Spinneretten gleichzeitig. Dadurch kann insbesondere Ausschussmaterial effektiv minimiert werden.

Gemäß empfohlener Ausführungsform der Erfindung wird der Anteil bzw. die Zusammensetzung der Kunststoffkomponenten bzw. insbesondere der zweiten Kunststoffkomponente durch Einstellung zumindest einer Dosiereinrichtung für die Kunststoffkomponenten bzw. für die zweite Kunststoffkomponente im Verfahrensbetrieb (online) variiert und zwar bevorzugt in Abhängigkeit von den Eigenschaften bzw. Parametern der damit erzeugten Spinnvlieslage, wobei empfohlenermaßen die Ansteuerung der Dosiereinrichtung bzw. der Dosiereinrichtungen mittels Hardware- und/oder Softwarekomponenten erfolgt und zwar gemäß bevorzugter Ausführungsvariante in Abhängigkeit von ermittelten bzw. gemessenen Eigenschaften der damit erzeugten Spinnvlieslage automatisch erfolgt. Es liegt im Rahmen der Erfindung, dass die Zusammensetzung der Kunststoffkomponenten bzw. der zweiten Kunststoffkomponente online durch Einstellung zumindest einer, vorzugsweise einer Dosiereinrichtung für die Kunststoffkomponenten bzw. für den zweiten Kunststoff und/oder durch Einstellung zumindest einer, bevorzugt einer Dosiereinrichtung für die Kunststoffkomponenten bzw. für den dritten Kunststoff der zweiten Kunststoffkomponente variiert wird und zwar empfohlenermaßen auf die vorstehend beschriebene Art und Weise.

Wie oben bereits angegeben, handelt es sich bei der Dosiereinrichtung nach einer bevorzugten Ausführungsform um eine Dosierschnecke und/oder Dosierpumpe und bevorzugt erfolgt die Einstellung durch Änderung der Drehzahl einer Dosierschnecke. Es empfiehlt sich vor allem, dass die vorstehend beschriebene Online-Einstellung der Zusammensetzung der Kunststoffkomponenten bzw. insbesondere der zweiten Kunststoffkomponente an allen Spinnbalken bzw. Spinneretten der Mehrbalken-Anlage möglich ist bzw. an allen Spinnbalken bzw. Spinneretten der Mehrbalken-Anlage durchgeführt wird.

Es liegt im Rahmen der Erfindung, dass bei der Erzeugung von Bikomponentenfilamenten bzw. Multikomponentenfilamenten dem Extruder für jede Kunststoffkomponente eine Spinnpumpe als Dosiereinrichtung für diese Kunststoffkomponente nachgeschaltet ist. Gemäß einer Ausführungsform der Erfindung meint Dosiereinrichtung (oder Dosierpumpe) eine Spinnpumpe bzw. auch eine Spinnpumpe. Es liegt somit im Rahmen der Erfindung, dass der Massendurchsatz der einzelnen Kunststoffkomponenten der Bikomponentenfilamente bzw. Multikomponentenfilamente online bzw. im Verfahrensbetrieb an zumindest einer Spinnpumpe eingestellt wird und zwar zweckmäßigerweise durch Variierung der Drehzahl der jeweiligen Spinnpumpe.

Im Zuge des erfindungsgemäßen Verfahrens wird zweckmäßigerweise jeweils ein Extruder für die Kunststoffkomponenten der herzustellenden Bikomponentenfilamente bzw. Mehrkomponentenfilamente eingesetzt. Empfohlenermaßen ist jedem dieser Extruder eine Spinnpumpe für die jeweilige Kunststoffkomponente als Dosiereinrichtung nachgeschaltet und durch Einstellung der Spinnpumpe bzw. der Drehzahl der Spinnpumpe kann die Menge der jeweils zugeführten Kunststoffkomponente und somit die Zusammensetzung der Bikomponentenfilamente bzw. Mehrkomponentenfilamente online bzw. im Verfahrensbetrieb eingestellt werden. - Es liegt im Rahmen der Erfindung, dass zumindest eine Kunststoffkomponente (insbesondere die zweite Kunststoffkomponente) der Bikomponenten- bzw. Mehrkomponentenfilamente als Kunststoffblend ausgebildet ist, wobei dieser Kunststoffblend einen Hauptkunststoff (insbesondere zweiter Kunststoff) und zumindest einen Nebenkunststoff (insbesondere dritter Kunststoff) umfasst. Nach einer empfohlenen Ausführungsvariante ist dem Extruder für die jeweilige Kunststoffkomponente (hier insbesondere zweite Kunststoffkomponente) für jeden Nebenkunststoff eine Dosiereinrichtung - insbesondere in Form einer Dosierschnecke - vorgeschaltet. Durch Einstellung dieser Dosiereinrichtung bzw. Dosierschnecke im Verfahrensbetrieb kann online die Zusammensetzung der zweiten Kunststoffkomponente variiert werden.

Der Erfindung liegt die Erkenntnis zugrunde, dass es für die schnelle Variierung des Kräuselungsgrades eine Spinnvlieslage bzw. für den schnellen Wechsel von einer Filamentzusammensetzung zu einer anderen Filamentzusammensetzung vorteilhaft ist mit dem gleichen Rohstoff (Kunststoff) bzw. mit der gleichen Rohstoffart (Kunststoffart) zu arbeiten und dass sich hierzu vor allem Polyolefine, insbesondere Polypropylene eignen und besonders die Polyolefine bzw. Polypropylene mit den hier herausgestellten Eigenschaften. Die Optimierung bzw. die Variierung des Kräuselungsgrades kann dann besonders einfach durch Veränderung der Komponentenanteile der Filamente einer Spinnvlieslage bzw. durch Veränderung der Anteile einer eingesetzten Kunststoffmischung bzw. eines eingesetzten Kunststoffblends realisiert werden.

Es liegt im Rahmen des erfindungsgemäßen Verfahrens, dass die erste Kunststoffkomponente der kräuselnden Filamente einer Spinnvlieslage aus zumindest einem ersten Kunststoff erzeugt wird und dass die zweite Kunststoffkomponente der kräuselnden Filamente einer Spinnvlieslage aus zumindest einem zweiten Kunststoff und zumindest einem dritten Kunststoff erzeugt wird. Es liegt fernerhin im Rahmen der Erfindung, dass der Anteil des dritten Kunststoffes im Verfahrensbetrieb (online) zur Variierung des Kräuselungsgrades der jeweiligen Spinnvlieslage einstellbar ist bzw. eingestellt wird. Zweckmäßigerweise wird der Anteil des zweiten Kunststoffes und des dritten Kunststoffes (der zweiten Kunststoffkomponente) im Verfahrensbetrieb (online) variiert. Es wurde bereits herausgestellt, dass nach besonders empfohlener Ausführungsform der Erfindung der zweite Kunststoff und/oder der dritte Kunststoff ein Polyolefin, insbesondere ein Polypropylen ist. Bei dem Einsatz von Polyolefin, insbesondere von Polypropylen kann eine besonders einfache und funktionssichere Online-Variierung des Anteils des zweiten Kunststoffes und/oder des Anteils des dritten Kunststoffes der Filamente einer kräuselnden Spinnvlieslage erfolgen.

Nach besonders bevorzugter Ausführungsform des erfindungsgemäßen Verfahrens erfolgt eine Verfestigung des Laminates durch Kalandrieren in zumindest einem Kalander.

Der Erfindung liegt insoweit die Erkenntnis zugrunde, dass sich die erfindungsgemäße Online-Variierung des Kunststoffkomponentenanteils bzw. des Kunststoffanteils der gekräuselten Filamente einer Spinnvlieslage besonders effektiv dazu einsetzen lässt, ein Spinnvlieslaminat aus den einzelnen eingestellten Spinnvlieslagen zu erhalten, das auf einfache und funktionssichere Weise von einer Ablage bzw. von einem Ablageband an einen Kalander übergeben werden kann und zwar insbesondere ohne eine große bzw. eine zu große Geschwindigkeitsdifferenz der Geschwindigkeiten des Ablagebandes einerseits und der Kalanderwalzen andererseits.

Es liegt im Rahmen der Erfindung, dass das Spinnvlieslaminat von einer Ablagevorrichtung, vorzugsweise von einen Ablagesiebband an einen Kalander übergeben wird und dass die Geschwindigkeit der Ablagevorrichtung bzw. des Ablagesiebbandes geringer ist als die Oberflächengeschwindigkeit der Kalanderwalzen und dass die Oberflächengeschwindigkeit der Kalanderwalzen um maximal 8 %, vorzugsweise um maximal 5 % größer ist als die Geschwindigkeit der Ablagevorrichtung bzw. des Ablagesiebbandes. Mit den erfindungsgemäßen Online-Variierungsmöglichkeiten ist die Einhaltung einer solchen relativ geringen Geschwindigkeitsdifferenz unproblematisch und die auf diese Weise kalandrierten Spinnvlieslaminate zeichnen sich durch einen störungsfreien bzw. fehlstellenfreien Aufbau und im Hinblick auf ihre einzelnen Spinnvlieslagen durch eine homogene Struktur aus.

Gegenstand der Erfindung ist auch eine Vorrichtung zur Herstellung eines Spinnvlieslaminates mit einer Mehrzahl von übereinander angeordneten Spinnvlieslagen, wobei zumindest zwei und maximal vier Spinnvlieslagen gekräuselte Endlosfilamente aufweisen bzw. aus gekräuselten Endlosfilamenten bestehen,
wobei die Vorrichtung eine Mehrzahl von hintereinander angeordneten Spinnbalken bzw. Spinneretten aufweist, wobei mit zumindest einem Teil der Spinnbalken - insbesondere mit zwei bis vier Spinnbalken - jeweils eine Spinnvlieslage mit/aus gekräuselten Multikomponentenfilamenten, insbesondere Bikomponentenfilamenten erzeugbar ist,
wobei einem Spinnbalken für jede Kunststoffkomponente der gekräuselten Multikomponentenfilamente bzw. Bikomponentenfilamente zumindest ein, vorzugsweise ein Extruder zugeordnet ist, mit dem die Kunststoffkomponente dem Spinnbalken bzw. der Spinnerette zuführbar ist
und wobei jedem Extruder zumindest eine Dosiereinrichtung zugeordnet ist, mit der die Menge und/oder die Zusammensetzung zumindest einer Kunststoffkomponente während des Betriebes der Vorrichtung (online) variierbar ist.

Gemäß einer sehr empfohlenen Ausführungsform ist zumindest einem Extruder zumindest eine Dosiereinrichtung - insbesondere in Form mindestens einer Dosierschnecke - vorgeschaltet und mit dieser Dosiereinrichtung bzw. Dosierschnecke ist die Zusammensetzung der dem Extruder zugeführten Kunststoffkomponente bzw. die Menge der dem Extruder zugeführten Kunststoffmischungsbestandteile während des Betriebs der Vorrichtung (online) variierbar. - Es liegt weiterhin im Rahmen der Erfindung, dass zumindest einem Extruder zumindest eine Dosiereinrichtung - insbesondere in Form einer Spinnpumpe - nachgeschaltet ist und dass mit dieser Dosiereinrichtung die Menge der dem Spinnbalken bzw. der Spinnerette zugeführten Kunststoffkomponente während des Betriebs der Vorrichtung (online) variierbar ist.

Nach einer bevorzugten Ausführungsform der erfindungsgemäßen Vorrichtung ist zumindest einem Spinnbalken einerseits zumindest ein Extruder bzw. ein Extruder für die Zuführung einer ersten Kunststoffkomponente aus einem ersten Kunststoff zugeordnet und andererseits zumindest ein, vorzugsweise ein zweiter Extruder für die Zuführung einer zweiten Kunststoffkomponente, insbesondere in Form eines Blends aus einem zweiten und einem dritten Kunststoff, wobei dem zweiten Extruder für das Blend zwei Dosiereinrichtungen vorgeschaltet sind, wobei eine Dosiereinrichtung für die zweite Kunststoffkomponente und die zweite Dosiereinrichtung für die dritte Kunststoffkomponente vorgesehen ist und wobei die Dosiereinrichtung für den zweiten Kunststoff und/oder die Dosiereinrichtung für den dritten Kunststoff während des Betriebs der Vorrichtung (online) steuerbar und/oder regelbar ist, um die Menge bzw. den Anteil des zweiten Kunststoffes und/oder des dritten Kunststoffes in dem Blend und somit in den Multikomponentenfilamenten bzw. Bikomponentenfilamenten (online) zu variieren. Zweckmäßigerweise ist jedem Extruder eines Spinnbalkens zumindest eine bzw. eine Spinnpumpe zugeordnet bzw. nachgeschaltet und durch Online-Einstellung der Spinnpumpen ist das Massenverhältnis zwischen den Kunststoffkomponenten der Mehrkomponentenfilamente bzw. Bikomponentenfilamente und insbesondere das Massenverhältnis zwischen einer ersten Komponente und einer zweiten Komponente der Bikomponentenfilamente online bzw. im Verfahrensbetrieb einstellbar ist. Dieses Massenverhältnis einer ersten Kunststoffkomponente zu einer zweiten Kunststoffkomponente von kräuselbaren Bikomponentenfilamenten beträgt im Rahmen der Erfindung vorzugsweise 70:30 bis 90:10 oder 50:50 bis 80:20.

Nach besonders bevorzugter Ausführungsform der Erfindung wird die folgende Vorrichtung zur Herstellung einer Spinnvlieslage aus gekräuselten Endlosfilamenten mittels eines Spinnbalkens eingesetzt: Mit dem Spinnbalken (Spinneinrichtung, Spinnerette) werden die Endlosfilamente in Form von Multikomponentenfilamenten, insbesondere Bikomponentenfilamenten ersponnen und im Anschluss daran durch eine Kühleinrichtung zur Kühlung der Filamente geführt. Vorzugsweise ist zwischen dem Spinnbalken und der Kühleinrichtung zumindest eine Monomerabsaugungsvorrichtung angeordnet, mit der eine Absaugung aus dem Filamentbildungsraum direkt unter dem Spinnbalken erfolgt, so dass neben Luft vor allem die beim Erspinnen der Filamente erzeugten Gase in Form von Zersetzungsprodukten, Monomeren, Oligomeren und dergleichen aus der Anlage entfernt werden können. Vorzugsweise wird in der Kühleinrichtung der von dem Spinnbalken erzeugte Filamentvorhang von gegenüberliegenden Seiten her mit Kühlluft beaufschlagt. Eine empfohlene Ausführungsform ist dadurch gekennzeichnet, dass die Kühleinrichtung in zumindest zwei in Strömungsrichtung der Filamente hintereinander angeordnete Kühlkammerabschnitte aufgeteilt ist, in denen Prozessluft unterschiedlicher Temperatur zuführbar ist.

Es liegt im Rahmen der Erfindung, dass in Strömungsrichtung der Filamente hinter bzw. unterhalb der Kühleinrichtung eine Verstreckvorrichtung anschließt, mit der die die Kühleinrichtung durchlaufenden Filamente gezogen bzw. verstreckt werden. Zweckmäßigerweise schließt unmittelbar an die Kühleinrichtung ein Zwischenkanal an, der vorzugsweise zur Filamentablage hin konvergierend ausgebildet ist bzw. keilförmig zusammenläuft. Nach Durchlaufen des Zwischenkanals tritt der Filamentvorhang bevorzugt in einen Unterziehkanal der Verstreckvorrichtung ein. Eine empfohlene Ausführungsform der Erfindung, der ganz besondere Bedeutung zukommt, ist dadurch gekennzeichnet, dass das Aggregat aus der Kühleinrichtung und der Verstreckvorrichtung bzw. das Aggregat aus der Kühleinrichtung und dem Zwischenkanal sowie dem Unterziehkanal als geschlossenes Aggregat ausgebildet ist. Geschlossenes Aggregat meint hier, dass außer der Zufuhr von Prozessluft bzw. Kühlluft in der Kühleinrichtung keine weitere Luftzufuhr in dieses Aggregat erfolgt und das Aggregat somit nach außen hin geschlossen ausgebildet ist.

Es empfiehlt sich, dass die aus der Verstreckvorrichtung austretenden Endlosfilamente durch eine Verlegeeinheit geführt werden, die zumindest einen Diffusor aufweist. Gemäß einer Ausführungsvariante sind zumindest zwei hintereinander angeordnete Diffusoren vorgesehen. Zweckmäßigerweise werden die Filamente nach Durchlaufen der Verlegeeinheit auf einer Ablagevorrichtung abgelegt, die vorzugsweise als Ablagesiebband ausgebildet ist. Dort werden die Filamente zur Vliesbahn bzw. zur Spinnvlieslage abgelegt. Es empfiehlt sich, dass das Ablagesiebband als Endlosband ausgeführt ist. Die Vliesbahn bzw. die Spinnvlieslage kann auf diesem Ablagesiebband auf zumindest eine bereits mit einem anderen Spinnbalken gebildete Spinnvlieslage abgelegt werden, so dass auf diese Weise ein Spinnvlieslaminat gebildet wird.

Gemäß einer empfohlenen Ausführungsform der erfindungsgemäßen Vorrichtung wird im Ablagebereich der mit einem Spinnbalken erzeugten Filamente in einem Absaugbereich Prozessluft durch das Ablagesiebband abgesaugt. Dabei können auch mehrere Absaugbereiche in Förderrichtung der Vliesbahn hintereinander angeordnet sein.

Der Erfindung liegt die Erkenntnis zugrunde, dass mit dem erfindungsgemäßen Verfahren und mit der erfindungsgemäßen Vorrichtung Spinnvlieslaminate mit hoher Dicke und hohem Volumen bei unterschiedlichem Kräuselgrad der Spinnvlieslagen erzeugt werden können und zwar auf einfache, funktionssichere und wenig aufwendige Weise. Es kann eine hohe Gleichmäßigkeit bzw. Homogenität sowie Stabilität der einzelnen Spinnvlieslagen erzielt werden. Wesentlich ist, dass auf einfache und zügige Weise die Stabilität und Festigkeit des gesamten Spinnvlieslaminates eingestellt und gewährleistet werden kann, so dass dieses ohne störende Beeinträchtigungen von einem Ablagesiebband an eine Verfestigungseinrichtung, insbesondere an einen Kalander übergeben werden kann. Die Übergabe an den Kalander kann bei vorteilhaft geringer Geschwindigkeitsdifferenz zwischen Ablagesiebband und Kalanderwalzen erfolgen. Der Erfindung liegt weiterhin die Erkenntnis zugrunde, dass diese beachtlichen Vorteile durch eine einfache Online-Einstellung der Filamentzusammensetzungen der einzelnen Spinnvlieslagen realisiert werden kann, indem diese kurzfristig und kontinuierlich an die gewünschten Resultate angepasst werden. Fernerhin liegt der Erfindung die Erkenntnis zugrunde, dass ein solcher schneller Online-Wechsel von einer Filamentzusammensetzung zu einer anderen Filamentzusammensetzung für eine Spinnvlieslage besonders problemlos erzielt werden kann, wenn mit dem gleichen Rohstoff für die einzelnen Filamentkomponenten gearbeitet wird und dieser sich lediglich durch unterschiedliche individuelle Parametereigenschaften auszeichnet. Insbesondere liegt der Erfindung die Erkenntnis zugrunde, dass bei der Online-Einstellung der Filamentzusammensetzungen besonders gute Resultate erreicht werden, wenn mit Polyolefinen und insbesondere mit Polypropylenen bzw. Polypropylen-Copolymeren für die einzelnen Filamentkomponenten bzw. mit entsprechenden Mischungen/Blends dieser Kunststoffe für eine Filamentkomponente gearbeitet wird. Von besonderem Vorteil ist weiterhin, dass bereits existierende Spunbond-Vorrichtungen in Form von Mehrbalken-Anlagen auf einfache Weise zu erfindungsgemäßen Vorrichtungen umgerüstet werden können. - Die erfindungsgemäßen Spinnvlieslaminate sind vor allem als Produkte im Hygienebereich geeignet, können grundsätzlich aber auch für andere Anwendungsbereiche eingesetzt werden.

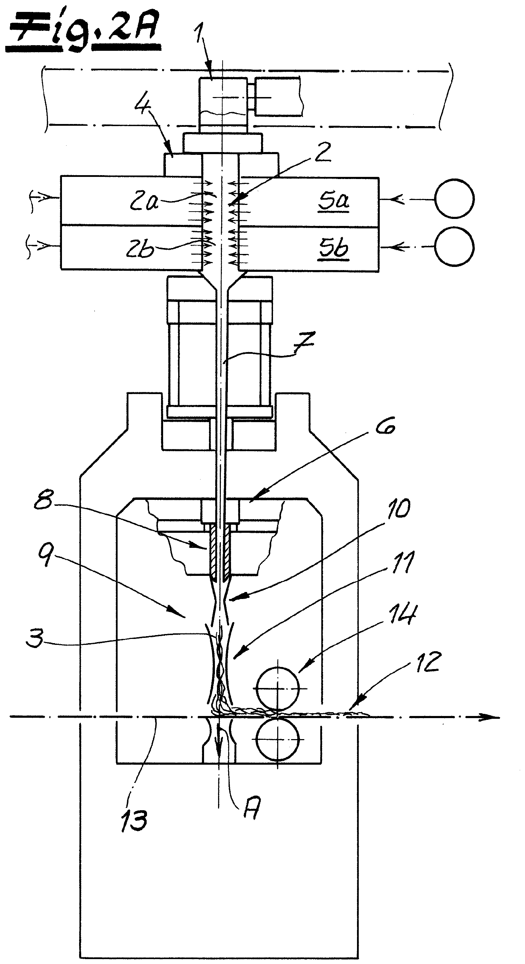

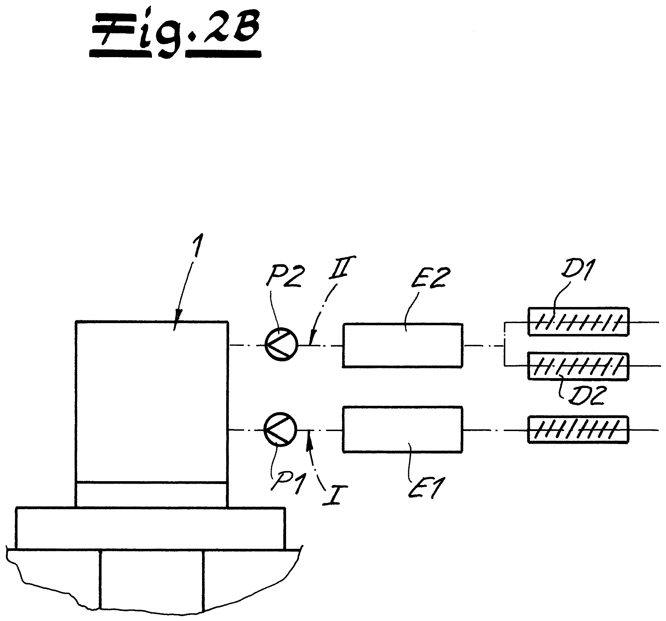

Nachfolgend wird die Erfindung anhand von Ausführungsbeispielen näher erläutert:
In den nachfolgenden Ausführungsbeispielen wurden Spinnvlieslagen bzw. Spinnvlieslaminate aus gekräuselten Bikomponentenfilamenten aus Polypropylenen erzeugt. Die erste Kunststoffkomponente der Bikomponentenfilamente bestand dabei aus einer Polypropylenkomponente PP1 und die zweite Kunststoffkomponente entweder lediglich aus einer Polypropylenkomponente PP2 oder aus einer Mischung bzw. einem Blend aus Polypropylenkomponenten PP2 und PP3. An jedem Spinnbalken bzw. an jeder Spinnerette wurde dabei mit einer in der Fig. 2 dargestellten und in der Figurenbeschreibung näher erläuterten Vorrichtung gearbeitet. Bei Einsatz eines Blends aus PP2 und PP3 waren dem Extruder für die zweite Kunststoffkomponente zwei Dosierschnecken vorgeschaltet, die jeweils für die Polypropylenkomponente PP2 bzw. für die Polypropylenkomponente PP3 bestimmt waren. Die Drehzahl der beiden Dosierschnecken konnte online bzw. im Verfahrensbetrieb ohne Abschaltung der Vorrichtung variiert werden.

### Ausführungsbeispiel 1:

In diesem Ausführungsbeispiel wurde eine Spinnvlieslage (Spunbond-Lage) aus gekräuselten Bikomponentenfilamenten mit Seite-an-Seite-Konfiguration und rundem Filamentquerschnitt aus Polypropylenen erzeugt. An der Lage wurde die erfindungsgemäße kontinuierliche Online-Einstellung der Filamentzusammensetzung durchgeführt. Das Massenverhältnis der ersten Kunststoffkomponente (Polypropylenkomponente PP1) zur zweiten Kunststoffkomponente (Blend aus Polypropylenkomponenten PP2 und PP3) betrug 70:30. Die Bikomponentenfilamente wurden mit einer Filamentfeinheit von 1,7 bis 1,8 den erzeugt. Die Spinnvlieslagen wurden jeweils mit einem Kalander bei einer Kalanderoberflächentemperatur von 140 °C verfestigt und zwar mit einer Prägefläche von 12 % mit runden Verfestigungserhebungen in einer Dichte von 25 fig/cm². Als erste Kunststoffkomponente der Bikomponentenfilamente wurde ein Homo-Polypropylen (PP1) mit einer Schmelzflussrate (MFR) von etwa 35 g/10 Min. eingesetzt. Für die erste Kunststoffkomponente wurde hier das Homo-Polypropylen "Exxon 3155" verwendet. Als zweite Kunststoffkomponente der Bikomponentenfilamente wurde ein Blend (Mischung) aus einem Homo-Polypropylen (PP2) und einem weiteren Homo-Polypropylen (PP3) eingesetzt, wobei beide Homo-Polypropylene eine Schmelzflussrate (MFR) von etwa 25 g/10 min. aufwiesen und die Molekulargewichtsverteilung (MWD) von PP3 breiter war als die von PP2. Als Homo-Polypropylen PP2 wurde im vorliegenden Fall "Basell Moplen HP561R" verwendet und als Homo-Polypropylen PP3 wurde "Basell Moplen HP552R" eingesetzt. Die genannte Filamentzusammensetzung wird hier und nachfolgend als PP-Kombination A bezeichnet. Mit diesen Bikomponentenfilamenten wurden gekräuselte Spinnvlieslagen mit einem Flächengewicht von 25 gsm erzeugt. Bei dem Spunbond-Verfahren zur Erzeugung der Bikomponentenfilamente wurde der Anteil von PP3 in dem Blend der zweiten Kunststoffkomponente im laufenden Verfahrensbetrieb von 0 bis 45 % PP3 variiert. Dabei wurde die Drehzahl der dem Extruder für die zweite Kunststoffkomponente vorgeschalteten beiden Dosierschnecken für PP3 bzw. PP2 online entsprechend verändert. Das Massenverhältnis 70:30 zwischen erster und zweiter Kunststoffkomponente blieb dabei unverändert.

**Tabelle 1: Online-Variierung des PP3-Anteils für die PP-Kombination A:**

| Nr. | Menge PP3 [%] | Lagendicke [mm] | MD-Dehnung [%] | MD-Kraft bei 5 / 10% Dehnung | Geschwindigkeitsanstieg [%] | loopAnzahl [1/10mm] | **loop-Durchmesser [µm]** |
|---|---|---|---|---|---|---|---|
| 1 | 0 | 0,34 | 92 | 7 / 11,9 | 0 | 2,3 | **745** |
| 2 | 15 | 0,41 | 128 | 2,7 / 4,7 | 1 | 5,4 | **580** |
| 3 | 30 | 0,67 | 137 | 1,4 / 2,2 | 8 | 9 | **427** |
| 4 | 45 | 0,69 | 135 | 1,8 / 2,8 | 15 | 11,6 | **252** |

In dieser Tabelle und in den nachfolgenden Tabellen wird deutlich, dass die MD-Dehnung, die Dicke bzw. Lagendicke und der notwendige Geschwindigkeitsanstieg des Kalanders bei Veränderung der Polymermenge bzw. PP3-Menge auf gleiche Weise reagieren bzw. variieren. Die MD-Kraft bei 5/10 % Dehnung charakterisiert im Übrigen die Steifigkeit der Vliesablage.

Unter ansonsten gleichen Bedingungen wie oben wurde eine etwas abweichende PP-Kombination B für die Bikomponentenfilamente der Spunbond-Lage verwendet. Als PP1 wurde hier ein Homo-Polypropylen "Borealis HH450FB" und als PP2 ein Homo-Polypropylen "Borealis HG475FB" eingesetzt. Der PP3-Kunststoff blieb unverändert ("Basell Moplen HP552R"). Die oben angegebenen Schmelzflussraten treffen auch für diese Kunststoffe zu und ebenso das oben angegebene Verhältnis der Molekulargewichtsverteilungen. Diese PP-Kombination B führte bei Variation des PP3-Anteils von 0 bis 45 % PP3 zu folgenden Ergebnissen:

**Tabelle 2: Online-Variierung des PP3-Anteils für die PP-Kombination B:**

| Nr. | Menge HP552R [%] | Lagendicke [mm] | MD-Dehnung [%] | MD-Kraft bei 5 / 10% Dehnung | Geschwindigkeitsanstieg [%] | loop-Durchmesser [µm] |
|---|---|---|---|---|---|---|
| 5 | 0 | 0,35 | 88 | 7,2 / 12,1 | 2 | 599 |
| 6 | 15 | 0,47 | 136 | 1,1 / 4,1 | 2 | 504 |
| 7 | 30 | 0,68 | 137 | 1,9 / 3,4 | 6,5 | 264 |
| 8 | 45 | 0,64 | 147 | 1,7 / 2,6 | 10 | 260 |

Der in den Tabellen angegebene Geschwindigkeitsanstieg bezieht sich im Übrigen auf den Anstieg der Geschwindigkeiten vom Ablagesiebband zu den Kalanderwalzen, der für eine funktionssichere Übergabe der Lage erforderlich ist. - Die beiden Tabellen zeigen, dass ein erhöhter Anteil des PP3 im Allgemeinen zu einer höheren Lagendicke und zu einem geringeren Sekantenmodul führt sowie zu einem höheren Geschwindigkeitsanstieg zwischen Ablagesiebband und Kalander. Vor allem in der Tabelle 1 (PP-Kombination A) ist erkennbar, dass ein höherer PP3-Anteil zu einer stärkeren Kräuselung führt. Die Anzahl der Schlingen bzw. Loops steigt mit dem PP3-Anteil und der Kräuselungsdurchmesser (Loop-Durchmesser) sinkt entsprechend mit dem PP3-Anteil. Im Übrigen ist den Tabellen entnehmbar, dass ein PP3-Anteil von 45 % nicht immer zu einer erhöhten Dicke führt im Vergleich zu einem PP3-Anteil von 30 %. Es scheint zweckmäßig, den Höchstanteil von PP3 als 50 % zu wählen.

Bei den eingesetzten Polypropylen-Kunststoffen konnte eine einfache und präzise Online-Variierung des PP3-Anteils im Verfahrensbetrieb problemlos durchgeführt werden. Der optimale PP3-Anteil lässt sich somit online ohne großen Aufwand insbesondere auch im Hinblick auf eine funktionssichere Übergabe der Lage vom Ablagesiebband zum Kalander mit optimaler Geschwindigkeitsdifferenz realisieren. Gute Ergebnisse zeigen hier vor allem die Beispiele 1 bis 3 und 5 bis 7.

### Ausführungsbeispiel 2:

Auch in diesem Ausführungsbeispiel wurde eine Spinnvlieslage (Spunbond-Lage) aus gekräuselten Bikomponentenfilamenten mit Seite-an-Seite-Konfiguration und rundem Filamentquerschnitt aus Polypropylenen erzeugt. An der Lage wurde eine erfindungsgemäße kontinuierliche Online-Einstellung der Filamentzusammensetzung durchgeführt und zwar wurde hier das Massenverhältnis der ersten Kunststoffkomponente (Polypropylenkomponente PP1) zur zweiten Kunststoffkomponente (Polypropylenkomponente PP2) online geändert. Dazu wurde der Massendurchsatz bzw. die Drehzahlen der den beiden Extrudern für die beiden Kunststoffkomponenten nachgeschalteten Spinnpumpen im Verfahrensbetrieb bzw. online variiert (s. Fig. 2b mit Bezugszeichen P1 und P2 für die beiden Spinnpumpen). Auch hier wurde wie im Ausführungsbeispiel 1 mit lediglich einem Spinnbalken gearbeitet und es wurden Bikomponentenfilamente mit einer Filamentfeinheit von etwa 1,7 den ersponnen. Die Spinnvlieslagen wurden jeweils mit einem Kalander entsprechend der Spezifizierung im Ausführungsbeispiel 1 verfestigt und zwar in diesem Fall mit einer Kalanderoberflächentemperatur von 130 °C. Es wurden Spinnvlieslagen mit einem Flächengewicht von 20 gsm erzeugt und zwar mit einer Produktionsgeschwindigkeit von 125 m/min. Als erste Kunststoffkomponente der Bikomponentenfilamente wurde ein Homo-Polypropylen (PP1) mit einer Schmelzflussrate (MFR) von etwa 25 g/10 min. eingesetzt und zwar wurde für die erste Kunststoffkomponente das Homo-Polypropylen "Basell Moplen HP 561R" eingesetzt. Als zweite Kunststoffkomponente der Bikomponentenfilamente wurde bei diesem Ausführungsbeispiel kein Blend eingesetzt sondern lediglich ein Kunststoff in Form eines statistischen Polypropylen-Copolymers mit einer Schmelzflussrate (MFR) von etwa 30 g/10 min. Hier wurde für die zweite Kunststoffkomponente das Polypropylen-Copolymer "Basell Moplen RP 248 R" verwendet. Die Schmelzpunktdifferenz zwischen der ersten Kunststoffkomponente (PP1) und der zweiten Kunststoffkomponente (PP2) betrug 12 °C. Wie oben bereits dargelegt wurde das Massenverhältnis der beiden Kunststoffkomponenten durch Variierung des Durchsatzes der beiden Spinnpumpen online bzw. im Verfahrensbetrieb geändert. In der nachfolgenden Tabelle 3 wird die Menge der ersten Kunststoffkomponente (PP1) in Prozent angegeben. Der Schmelzpunkt der Kunststoffe bzw. Polymere wird im Übrigen mittels DSC nach ISO 11357-3 gemessen.

**Tabelle 3:**

| Nr. | Menge PP1 [%] | Dicke [mm] | MD-Dehnung bei max. Kraft [%] | MD max. Festigkeit [N/5cm] | Geschwindigkeitsanstieg [%] | loop-Durchmesser [µm] |
|---|---|---|---|---|---|---|
| 9 | 30 | 0,53 | 157 | 19,4 | 1,6 | 245 |
| 10 | 40 | 0,49 | 152 | 24,2 | 0,5 | 240 |
| 11 | 50 | 0,39 | 161 | 33,4 | 0,5 | 223 |
| 12 | 60 | 0,33 | 146 | 39,3 | 0,5 | 332 |
| 13 | 70 | 0,29 | 140 | 48 | 0,5 | 537 |
| 14 | 80 | 0,29 | 123 | 51,6 | 0,5 | 513 |

Es ist erkennbar, dass bei einem Anteil von 30 Gew.-% der ersten Kunststoffkomponente (PP1) die Dicke der Spinnvlieslage am höchsten ist. Ein optimaler Kompromiss zwischen Dicke und Geschwindigkeitsanstieg ergibt sich hier insbesondere für das Beispiel Nr. 10. - Da bei diesem Ausführungsbeispiel kein Blend für die zweite Kunststoffkomponente eingesetzt wird, ist der Einsatz zweier Dosierschnecken vor einem Extruder nicht erforderlich. Die Online-Variierung des Anteils der beiden Kunststoffkomponenten (PP1, PP2) erfolgt lediglich durch Änderung der Drehzahl der beiden Spinnpumpen für die beiden Kunststoffkomponenten.

### Ausführungsbeispiel 3:

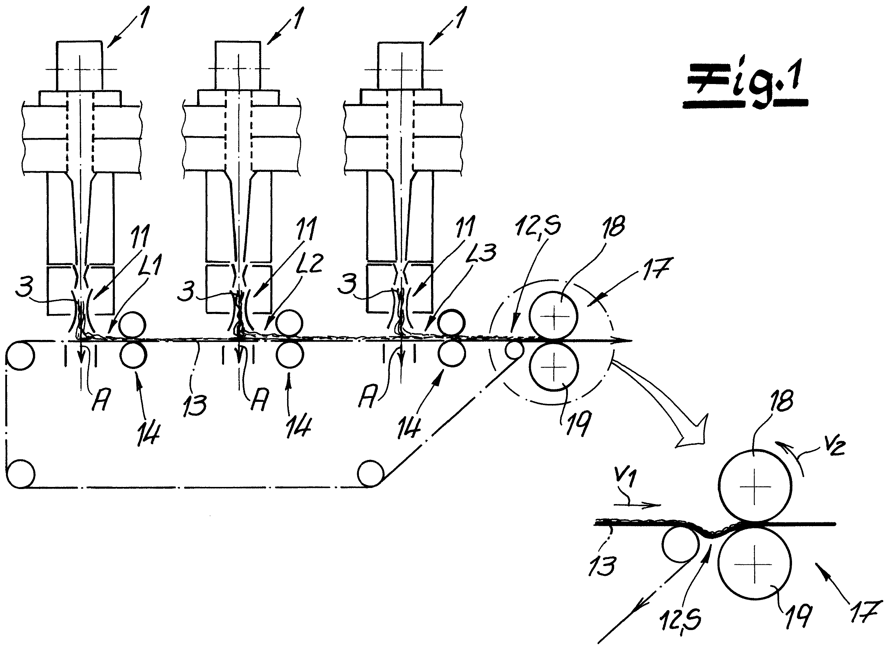

Es wurden dreilagige Spinnvlieslaminate aus jeweils gekräuselten Bikomponentenfilamenten erzeugt und zwar unter Einsatz einer Spunbond-Vorrichtung mit drei Spinnbalken (s. auch Figuren 1 und 2). Dabei wurde jeweils eine Kalandrierung des Laminates mit den Kalanderparametern gemäß Ausführungsbeispiel 1 durchgeführt. Die Spinnvlieslaminate wurden jeweils mit einem Flächengewicht von 25 gsm bei einer Produktionsgeschwindigkeit von 400 m/Minuten erzeugt. Jede Zeile bzw. jede Nummer in der nachfolgenden Tabelle 4 entspricht somit einem dreilagigen Spinnvlieslaminat. Die Spinnvlieslaminate entsprechend den Nummern 17 und 18 verwenden für alle drei Spinnvlieslagen die oben spezifizierten PP-Kombinationen A bzw. B. Die Spinnvlieslaminate entsprechend den Nummern 15 und 16 weisen dagegen für alle drei Lagen eine PP-Kombination C auf. Bei dieser PP-Kombination C entspricht die erste Kunststoffkomponente dem Homo-Polypropylen PP1 aus der PP-Kombination A (MFR von etwa 35 g/10 min., "Exxon 3155") und auch in dem Blend (Mischung) der zweiten Kunststoffkomponente wird als Homo-Polypropylen PP2 dieser Kunststoff "Exxon 3155" verwendet. Als weiteres Homo-Polypropylen PP3 des Blends der zweiten Kunststoffkomponente wird dagegen ein Homo-Polypropylen mit einer Schmelzflussrate von 13 g/10 min. eingesetzt mit einer breiten Molekulargewichtsverteilung ("Basell Moplen HP552N"). Die Molekulargewichtsverteilung dieses Homo-Polypropylens PP3 ist wiederum breiter als die Molekulargewichtsverteilung des Homo-Polypropylens PP2 und auch als die des mit PP2 identischen Homo-Polypropylens PP1.

Zu den einzelnen Spinnbalken der drei Balken-Anlage wird in der nachfolgenden Tabelle 4 zum einen das Massenverhältnis der ersten Kunststoffkomponente zur zweiten Kunststoffkomponente der Bikomponentenfilamente angegeben und zum anderen der Anteil des Homo-Polypropylens PP3 in dem Blend der zweiten Kunststoffkomponente.

**Tabelle 4: Dreilagige Spinnvlieslaminate mit PP-Kombinationen A, B und C:**

| Nr. | PP-Kombination | Massenverhältnis der Komponenten 1 : 2 | | | PP3-Menge [%] | | |
|---|---|---|---|---|---|---|---|
| | | Balken 1 | Balken 2 | Balken 3 | Balken 1 | Balken 2 | Balken 3 |
| 15 | C | 80:20 | 70:30 | 70:30 | 25 | 25 | 25 |
| 16 | C | 90:10 | 70:30 | 70:30 | 25 | 25 | 25 |
| 17 | A | 80:20 | 80:20 | 80:20 | 10 | 45 | 45 |
| 18 | B | 80:20 | 80:20 | 80:20 | 10 | 30 | 30 |
| | | | | | | | |

| Nr. | Dicke [mm] | Geschwindigkeitsan stieg [%] | MD-Dehnung [%] | MD-Zugkraft [N/5cm] | MD-Zugkraft bei 5/10% Dehnung [N/5cm] | loop-Durchmesser Balken 1 [µm] | loop-Durchmesser Balken 3 [µm] |
|---|---|---|---|---|---|---|---|
| 15 | 0,57 | 6 | 149 | 22,4 | 2,1 / 3,4 | 392 | 342 |
| 16 | 0,45 | 4,5 | 129 | 24,5 | 2,8 / 4,4 | 546 | 386 |
| 17 | 0,53 | 4,5 | 141 | 22,1 | 2,4 /3,8 | 496 | 399 |
| 18 | 0,44 | 5 | 116 | 30,3 | 4,3 / 6,8 | 527 | 450 |

In den Beispielen Nr. 15 und 16 mit der PP-Kombination C wurde beim ersten Spinnbalken im Vergleich zu den beiden anderen Spinnbalken ein anderes Massenverhältnis der beiden Komponenten der Bikomponentenfilamente eingestellt. Die PP3-Menge blieb hier bei allen drei Balken mit 25 % gleich. Dagegen blieb bei den Beispielen 17 und 18 mit den PP-Kombinationen A und B das Massenverhältnis der beiden Komponenten bei allen drei Balken konstant, während die PP3-Menge geändert wurde. Bei allen Spinnvlieslaminaten kann eine optimale Dicke erreicht werden sowie zufriedenstellende Festigkeitswerte und nichtsdestoweniger ist die Handhabbarkeit der Laminate (Übergabe an den Kalander mit relativ geringem Geschwindigkeitsanstieg) problemlos und funktionssicher möglich. Es ist auch offensichtlich, dass durch die Einstellung des Crimpgradienten die MD-Zugkraft bei z. B. 5 % oder 10 %, d. h. der Sekantenmodul für diese Dehnung, beeinflusst wird. Zufriedenstellende Verarbeitungseigenschaften (Wickel- und Abwickeleigenschaften, Neck-In, etc.) bei Wahrung u. a. bestimmter Dickenanforderungen sind durch diese Einstellung der einzelnen Lagen erreichbar. Die Loop-Durchmesser in der Tabelle 4 zeigen, dass die mit dem ersten Spinnbalken hergestellte untere Lage einen größeren Loop-Durchmesser aufweist als die mit dem dritten Spinnbalken hergestellte oberste Lage und somit auch als die mittlere Lage, die mit der obersten Lage bzgl. der eingesetzten Kunststoffmengen identisch ist. Somit ergibt sich hier für die drei Lagen aller vier Spinnvlieslaminate eine Veränderung des Kräuselungsgrades bzw. ein Kräuselungsgradient "niedrig" / "hoch" / "hoch" (von der untersten zur obersten Lage). Ein solches Spinnvlieslaminat ist beispielsweise in der Figur 4a dargestellt. Dies entspricht der bevorzugten Ausführungsform der Erfindung, wonach der Kräuselungsgrad in dem Spinnvlieslaminat von unten nach oben zunehmen soll. - Bei den Beispielen 15 und 16 ist im Übrigen der Loop-Durchmesser der untersten Lage (mit dem ersten Spinnbalken erzeugt) bei dem Beispiel Nr. 15 deutlich kleiner als bei dem Beispiel Nr. 16. Diese stärkere Kräuselung bei dem Beispiel Nr. 15 ist auf den höheren Massenanteil der zweiten Komponente (20 Gew.-%) in den Bikomponentenfilamenten des ersten Spinnbalkens zurückzuführen.

Nachfolgend wird die Erfindung anhand einer ein Ausführungsbeispiel darstellenden Zeichnung näher erläutert. Es zeigen in schematischer Darstellung:
- Fig. 1: eine Seitenansicht einer erfindungsgemäßen Vorrichtung mit drei Spinnbalken im Schnitt,
- Fig. 2a: einen Teil der Vorrichtung aus Fig. 1 mit einem Spinnbalken im Schnitt,
- Fig. 2b: einen Ausschnitt aus Fig. 2a,
- Fig. 3: Querschnitte von im Rahmen der Erfindung einsetzbaren Bikomponentenfilamenten und
- Fig. 4a, b, c: drei erfindungsgemäß erzeugte Spinnvlieslaminate im Schnitt.

Die Fig. 1 zeigt eine erfindungsgemäße Vorrichtung zur Herstellung eines Spinnvlieslaminates S, das bevorzugt und im Ausführungsbeispiel drei Spinnvlieslagen L1, L2 und L3 aufweist. Entsprechend den drei Spinnvlieslagen L1, L2 und L3 sind drei Spinnbalken bzw. Spinneretten 1 vorgesehen aus denen bevorzugt und im Ausführungsbeispiel jeweils Filamente 3 in Form von Bikomponentenfilamenten ersponnen werden. Die Filamente 3 jeder Spinnvlieslage L1, L2 und L3 werden nach Durchtritt durch einen Diffusor 11 auf einem Ablagesiebband 13 zur Spinnvlieslage L1, L2 bzw. L3 abgelegt. Jede Spinnvlieslage L1, L2, L3 wird dabei mit einem Kompaktierwalzenpaar 14 kompaktiert. Das fertige dreilagige Spinnvlieslaminat S wird dann von dem Ablagesiebband 13 an einem Kalander 17 aus zwei Kalanderwalzen 18, 19 übergeben. Die Fig. 1 zeigt auch einen vergrößerten Ausschnitt der Übergabe des Spinnvlieslaminates S von dem Ablagesiebband 13 an den Kalander 17. Das Ablagesiebband 13 wird mit einer Geschwindigkeit v₁ bewegt, während die Kalanderwalzen 18, 19 mit einer Oberflächengeschwindigkeit v₂ rotieren. Es liegt im Rahmen der Erfindung, dass die Oberflächengeschwindigkeit v₂ der Kalanderwalzen 18, 19 um maximal 8 %, vorzugsweise um maximal 5 % größer ist als die Geschwindigkeit v₁ des Ablagesiebbandes 13.

Die Fig. 2 zeigt einen Teil der erfindungsgemäßen Vorrichtung im Bereich eines Spinnbalkens bzw. im Bereich einer Spinnerette 1. Mit diesem Vorrichtungsteil wird eine Spinnvlieslage L1 oder L2 oder L3 erzeugt. Zunächst werden die Filamente 3 - bevorzugt und im Ausführungsbeispiel in Form von Bikomponentenfilamenten - mittels der Spinnerette 1 ersponnen und im Anschluss daran durch eine Kühleinrichtung 2 zur Kühlung der Filamente 3 geführt. Es empfiehlt sich, dass zwischen der Spinnerette 1 und der Kühleinrichtung 2 eine Monomerabsaugungsvorrichtung 4 angeordnet ist, mit der eine Absaugung aus dem Filamentbildungsraum direkt unterhalb der Spinnerette 1 erfolgt. Hier werden neben Luft vor allem die beim Erspinnen der Filamente 3 erzeugten Gase in Form von Zersetzungsprodukten, Monomeren, Oligomeren und dergleichen aus der Anlage entfernt.

In der Kühleinrichtung 2 wird vorzugsweise der von der Spinnerette 1 zur Filamentablage geführte Filamentvorhang von gegenüberliegenden Seiten her mit Kühlluft beaufschlagt. Nach bevorzugter Ausführungsform ist die Kühleinrichtung 2 dabei in zwei in Strömungsrichtung der Filamente 3 hintereinander angeordnete Kühlkammerabschnitte 2a, 2b aufgeteilt, in denen Prozessluft unterschiedlicher Temperatur zuführbar ist. So kann beispielsweise in dem in Strömungsrichtung ersten Kühlkammerabschnitt 2a Prozessluft niederer Temperatur (beispielsweise 20 °C) zugeführt werden und in dem in Strömungsrichtung darunter angeordneten zweiten Kühlabschnitt 2b Prozessluft bzw. Kühlluft mit höherer Temperatur (beispielsweise 25 °C) zugeführt werden. Die Zuführung der Kühlluft erfolgt dabei zweckmäßigerweise über Luftzufuhrkabinen 5a und 5b.

Empfohlenermaßen und im Ausführungsbeispiel schließt hinter bzw. unterhalb der Kühleinrichtung 2 eine Verstreckvorrichtung 6 an, mit der bewirkt wird, dass die die Kühleinrichtung 2 durchlaufenden Filamente 3 gezogen bzw. verstreckt werden. Unmittelbar an die Kühleinrichtung 2 schließt bevorzugt und im Ausführungsbeispiel der Zwischenkanal 7 an, der vorzugsweise zur Ablage der Filamente 3 hin konvergierend ausgebildet ist bzw. keilförmig zusammenläuft. Zweckmäßigerweise tritt der Filamentvorhang nach dem Zwischenkanal 7 in den Unterziehkanal 8 der Verstreckvorrichtung 6 ein.

Gemäß sehr empfohlener Ausführungsform der Erfindung ist das Aggregat aus der Kühleinrichtung 2 und der Verstreckvorrichtung 6 (Zwischenkanal 7 und Unterziehkanal 8) als geschlossenes Aggregat ausgebildet. Geschlossenes Aggregat meint dabei, dass außer der Zufuhr von Prozessluft bzw. Kühlluft in der Kühleinrichtung 2 keine weitere Luftzufuhr in dieses Aggregat erfolgt und das Aggregat somit nach außen hin geschlossen ausgeführt ist. Zweckmäßigerweise ist ein solches geschlossenes Aggregat bei der erfindungsgemäßen Vorrichtung für alle Vorrichtungsteile mit Spinnbalken bzw. Spinneretten 1 zur Erzeugung von gekräuselten Filamenten 3 realisiert.

Vorzugsweise werden die aus der Verstreckvorrichtung 6 austretenden Filamente 3 durch eine Verlegeeinheit 9 geführt, die zumindest einen Diffusor 10, 11 aufweist. Bevorzugt und im Ausführungsbeispiel sind zwei hintereinander angeordnete Diffusoren 10, 11 vorgesehen. Nach Durchlaufen der Verlegeeinheit 9 werden die Filamente 3 empfohlenermaßen und im Ausführungsbeispiel auf der Ablagevorrichtung bzw. auf dem Ablagesiebband 13 zur Vliesbahn 12 bzw. zur Spinnvlieslage L1 oder L2 oder L3 abgelegt. Das Ablagesiebband 13 ist bevorzugt als Endlosband ausgebildet.

Zweckmäßigerweise und im Ausführungsbeispiel wird im Ablagebereich der Filamente 3 bzw. der Vliesbahn 12 Prozessluft durch das Ablagesiebband 13 abgesaugt, was in der Figur 1 und 2a durch den Pfeil A verdeutlicht wird. Empfohlenermaßen und im Ausführungsbeispiel wird die abgelegte Vliesbahn 12 bzw. die abgelegte Spinnvlieslage L1, L2 oder L3 mit dem Ablagesiebband zunächst durch den Spalt eines Kompaktierwalzenpaares 14 zur Kompaktierung geführt. - Wie in Fig. 1 angedeutet wird das aus den Spinnvlieslagen L1, L2, L3 gebildete Spinnvlieslaminat S zur Verfestigung durch einen Kalander 17 aus Kalanderwalzen 18, 19 geführt.

Der vergrößerte Ausschnitt in der Fig. 2b zeigt zwei Extruder E1 und E2, mit denen die beiden Kunststoffkomponenten I und II der Spinnerette 1 zugeführt werden. Bei der Kunststoffkomponente II handelt es sich dabei um ein Blend (Mischung) aus Kunststoffen und zwar nach empfohlener Ausführungsform aus Polypropylenen. Dem dieser Kunststoffkomponente II zugeordneten Extruder E2 sind zwei Dosierschnecken D1 und D2 vorgeschaltet, wobei mit jeder Dosierschnecke D1 und D2 einer der beiden Kunststoffe des Blends dem Extruder E2 zugeführt wird. Empfohlenermaßen und im Ausführungsbeispiel ist die Drehzahl der Dosierschnecken D1 und/oder D2 online bzw. im Verfahrensbetrieb ohne Abschaltung der Vorrichtung steuerbar und/oder regelbar. Zweckmäßigerweise sind dazu entsprechende nicht dargestellte Hardwarekomponenten und/oder Softwarekomponenten vorgesehen. Den Extrudern E1 und E2 ist für jede Kunststoffkomponente I und II jeweils eine Spinnpumpe P1 und P2 nachgeschaltet, mit denen der Massendurchsatz der Kunststoffkomponenten I und II eingestellt bzw. geregelt werden kann. Es liegt im Rahmen der Erfindung, dass dieser Massendurchsatz der beiden Kunststoffkomponenten I und II online bzw. im Verfahrensbetrieb gesteuert und/oder geregelt wird.

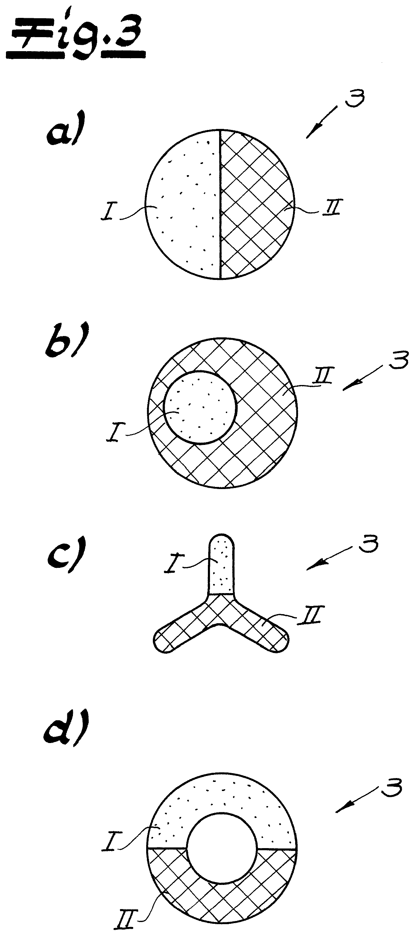

In der Fig. 3 sind typische Querschnitte für Bikomponentenfilamente dargestellt, die vorzugsweise mit dem erfindungsgemäßen Verfahren bzw. mit der erfindungsgemäßen Vorrichtung hergestellt werden. Mit diesen Filamentquerschnitten der Bikomponentenfilamente lassen sich gekräuselte Filamente 3 erzeugen. In der Fig. 3a ist eine typische Seite-an-Seite-Konfiguration von kräuselbaren Bikomponentenfilamenten dargestellt. Auf jeder Seite dieses Filamentquerschnittes ist eine Kunststoffkomponente I bzw. II angeordnet. Die Fig. 3b zeigt eine azentrische Kern-Mantel-Konfiguration für kräuselbare Bikomponentenfilamente. In der Fig. 3c ist ein trilobaler Querschnitt für kräuselbare Bikomponentenfilamente dargestellt. Schließlich zeigt die Fig. 3d ein innen hohles Filament 3 mit Seite-an-Seite-Konfiguration. Alle diese Filamentquerschnitte eignen sich zur Herstellung von kräuselbaren Bikomponentenfilamenten.

In der Fig. 4 sind drei mit dem erfindungsgemäßen Verfahren herstellbare Spinnvlieslaminate S dargestellt. In allen Beispielen weist die unterste Spinnvlieslage L1 die geringste Kräuselung auf und die mittlere Spinnvlieslage L2 demgegenüber eine höhere Kräuselung auf. Folglich nimmt der Kräuselungsgrad von unten nach oben im Spinnvlieslaminat S zu. Im Spinnvlieslaminat S gemäß Fig. 4a ist eine Kräuselungsreihenfolge "niedrig" / "hoch"/ "hoch" zu beobachten, während im Beispiel nach Fig. 4b eine Kräuselungsreihenfolge "niedrig" / "mittel" / "hoch" von unten nach oben zu beobachten ist. Das Ausführungsbeispiel gemäß Fig. 4c zeigt schließlich eine Kräuselungsreihenfolge "niedrig" / "hoch"/ "niedrig".

## Patentansprüche

1. Spinnvlieslaminat mit einer Mehrzahl von übereinander angeordneten Spinnvlieslagen, wobei zumindest zwei und maximal vier Spinnvlieslagen gekräuselte Endlosfilamente aufweisen bzw. aus gekräuselten Endlosfilamenten bestehen, wobei der Kräuselungsgrad der Filamente in diesen Spinnvlieslagen unterschiedlich ist, wobei die gekräuselten Filamente der Spinnvlieslagen jeweils eine Kräuselung mit mindestens 3 Schlingen (loops) pro Zentimeter ihrer Länge aufweisen,
wobei die gekräuselten Filamente der Spinnvlieslagen als Multikomponentenfilamente, insbesondere als Bikomponentenfilamente, mit zumindest einer ersten Kunststoffkomponente und zumindest einer zweiten Kunststoffkomponente ausgebildet sind, wobei jede der beiden Kunststoff-komponenten zu mindestens 10 Gew.-%, vorzugsweise zu mindestens 15 Gew.-% in dem jeweiligen Filament vorhanden ist,
wobei der Kräuselungsgrad einer unteren Spinnvlieslage der übereinander angeordneten Spinnvlieslagen geringer ist als der Kräuselungsgrad zumindest einer darüber angeordneten Spinnvlieslage,
wobei die zweite Kunststoffkomponente eine Mischung bzw. ein Blend aus zumindest einem zweiten Kunststoff und zumindest einem dritten Kunststoff aufweist bzw. ist und wobei der Anteil des dritten Kunststoffes - bezogen auf das gesamte Filament - weniger als 25 Gew.-% beträgt.

2. Spinnvlieslaminat nach Anspruch 1, wobei
- die Schmelzflussrate der ersten Komponente 1,0 bis 3 mal, bevorzugt 1,2 bis 1,5 mal größer ist als die Schmelzflussrate der zweiten Komponente
- und/oder wobei die Molekulargewichtsverteilung (M_{w}/Mₙ oder M_{z}/M_{w}) der ersten Komponente enger ist als die Molekulargewichtsverteilung der zweiten Komponente und/oder der M_{w}/Mₙ-Wert oder M_{z}/M_{w}-Wert der zweiten Komponente mindestens 1,1 mal größer ist als die/der der ersten Komponente
- und/oder wobei die Schmelzpunktdifferenz zwischen der ersten und der zweiten Komponente mindestens 10 °C beträgt.

3. Spinnvlieslaminat nach einem der Ansprüche 1 oder 2, wobei die Differenz zwischen den Flächengewichten der Spinnvlieslagen mit gekräuselten Filamenten weniger als 25%, vorzugsweise weniger als 15% und bevorzugt als weniger als 10% beträgt.

4. Spinnvlieslaminat nach einem der Ansprüche 1 bis 3, wobei der Kräuselungsgrad der übereinander angeordneten Spinnvlieslagen von unten nach oben zunimmt.

5. Spinnvlieslaminat nach einem der Ansprüche 1 bis 4, wobei die erste Kunststoffkomponente einen ersten Kunststoff aufweist bzw. aus zumindest einem ersten Kunststoff besteht.

6. Spinnvlieslaminat nach Anspruch 5, wobei die Molekulargewichtsverteilung des dritten Kunststoffes breiter ist als die Molekulargewichtsverteilung des ersten Kunststoffes und/oder breiter ist als die Molekulargewichtsverteilung des zweiten Kunststoffes.

7. Spinnvlieslaminat nach einem der Ansprüche 1 bis 6, wobei der erste Kunststoff und/oder der zweite Kunststoff und/oder der dritte Kunststoff ein Polyolefin bzw. ein Homo-Polyolefin und/oder ein Polyolefin-Copolymer ist.

8. Spinnvlieslaminat nach einem der Ansprüche 1 bis 7, wobei der erste Kunststoff und/oder der zweite Kunststoff und/oder der dritte Kunststoff ein Polypropylen bzw. ein Homopolypropylen und/oder ein Polypropylen-Copolymer ist.

9. Spinnvlieslaminat nach einem der Ansprüche 5 bis 8, wobei der Anteil des dritten Kunststoffes - bezogen auf die zweite Kunststoffkomponente - 10 bis 50 Gew.-% beträgt.

10. Spinnvlieslaminat nach einem der Ansprüche 1 bis 9, wobei das Laminat ein durch Kalandrieren verfestigtes Laminat ist.

11. Spinnvlieslaminat nach einem der Ansprüche 1 bis 10, wobei das Laminat eine Dicke von 0,2 bis 0,8 mm, vorzugsweise von 0,3 bis 0,6 mm aufweist.

12. Spinnvlieslaminat nach einem der Ansprüche 1 bis 11, wobei das Laminat eine spezifische Dicke von 0,6 bis 3,2 mm/100gsm, bevorzugt von 0,8 bis 3 mm/100gsm aufweist.

13. Spinnvlieslaminat nach einem der Ansprüche 1 bis 12, wobei die Feinheit der gekräuselten Filamente in dem Laminat 0,8 bis 3 Denier in allen Spinnvlieslagen mit gekräuselten Filamenten beträgt.

14. Spinnvlieslaminat nach einem der Ansprüche 1 bis 13, wobei das Flächengewicht des Laminates zwischen 10 und 50 g/m², bevorzugt zwischen 10 und 40 g/m² beträgt.

15. Verfahren zur Erzeugung eines Laminates mit einer Mehrzahl von übereinander angeordneten Spinnvlieslagen - insbesondere eines Laminates nach einem der Ansprüche 1 bis 14 -, wobei zumindest zwei und maximal vier Spinnvlieslagen mit bzw. aus gekräuselten Endlosfilamenten mit der Maßgabe erzeugt werden, dass der Kräuselungsgrad der Endlosfilamente in diesen Spinnvlieslagen unterschiedlich ist,
wobei die gekräuselten Filamente der Spinnvlieslagen als Multikomponentenfilamente, insbesondere als Bikomponentenfilamente, mit einer ersten Kunststoffkomponente und einer zweiten Kunststoffkomponente hergestellt werden, wobei jede der beiden Komponenten zu mindestens 10 Gew.-%, vorzugsweise zu mindestens 15 Gew.-% in dem Filament vorhanden ist,
wobei für die Filamente zumindest einer Spinnvlieslage mit gekräuselten Filamenten, vorzugsweise mehrerer Spinnvlieslagen mit gekräuselten Filamenten und bevorzugt aller Spinnvlieslagen mit gekräuselten Filamenten, der Anteil bzw. die Zusammensetzung der ersten Kunststoffkomponente und/oder der zweiten Kunststoffkomponente im Verfahrensbetrieb - online - zur Variierung des Kräuselungsgrades eingestellt wird
und wobei den Kunststoffkomponenten bzw. den Kunststoffen für eine Spinnvlieslage jeweils eine Dosiereinrichtung zugeordnet ist und wobei die Kunststoffkomponentenzufuhr bzw. die Kunststoffzufuhr durch zumindest eine Dosiereinrichtung im laufenden Betrieb online zur Variierung des Kräuselungsgrades der Spinnvlieslage verändert wird.

16. Verfahren nach Anspruch 15,
- wobei die Schmelzflussrate der ersten Komponente 1,0 bis 3 mal, bevorzugt 1,2 bis 1,5 mal größer ist als die Schmelzflussrate der zweiten Komponente
- und/oder wobei die Molekulargewichtsverteilung (M_{w}/Mₙ oder M_{z}/M_{w}) der ersten Komponente enger ist als die Molekulargewichtsverteilung der zweiten Komponente und/oderder M_{w}/Mₙ-Wert oder M_{z}/M_{w}-Wert der zweiten Komponente mindestens 1,1 mal größer ist als die/der der ersten Komponente
- und/oder wobei die Schmelzpunktdifferenz zwischen der ersten und der zweiten Komponente mindestens 10 °C beträgt.

17. Verfahren nach einem der Ansprüche 15 oder16, wobei die Kunststoffkomponentenzufuhr bzw. die Kunststoffzufuhr durch die zumindest eine Dosiereinrichtung im laufenden Betrieb (online) durch Variierung der Drehzahl der Dosiereinrichtung verändert wird.

18. Verfahren nach Anspruch 15 bis17, wobei den Kunststoffkomponenten für eine Spinnvlieslage jeweils eine Spinnpumpe als Dosiereinrichtung zugeordnet ist und wobei die Kunststoffkomponentenzufuhr durch zumindest eine Spinnpumpe im laufenden Betrieb (online) zur Variierung des Kräuselungsgrades der Spinnvlieslage verändert wird, insbesondere durch Variierung der Drehzahl der Spinnpumpe verändert wird.

19. Verfahren nach einem der Ansprüche 15 bis18, wobei die erste Kunststoffkomponente aus zumindest einem ersten Kunststoff erzeugt wird, wobei die zweite Kunststoffkomponente aus zumindest einem zweiten Kunststoff und zumindest einem dritten Kunststoff erzeugt wird und wobei zumindest der Anteil des dritten Kunststoffes im Verfahrensbetrieb (online) zur Variierung des Kräuselungsgrades der jeweiligen Spinnvlieslage einstellbar ist bzw. eingestellt wird.

20. Verfahren nach Anspruch 19, wobei der Anteil des zweiten und/oder des dritten Kunststoffes im Verfahrensbetrieb (online) variiert wird.

21. Verfahren nach einem der Ansprüche 19 oder20, wobei der zweite Kunststoff und/oder der dritte Kunststoff ein Polyolefin, insbesondere ein Polypropylen ist.

22. Verfahren nach einem der Ansprüche 15 bis21, wobei das Laminat in zumindest einem Kalander kalandriert wird.

23. Verfahren nach einem der Ansprüche 15 bis 22, wobei das Laminat von einer Ablagevorrichtung, vorzugsweise von einem Ablagesiebband an einen Kalander übergeben wird, wobei die Geschwindigkeit der Ablagevorrichtung bzw. des Ablagesiebbandes geringer ist als die Oberflächengeschwindigkeit der Kalanderwalzen und wobei die Oberflächengeschwindigkeit der Kalanderwalzen um maximal 8%, vorzugsweise um maximal 5% größer ist als die Geschwindigkeit der Ablagevorrichtung bzw. des Ablagesiebbandes.

24. Vorrichtung zur Herstellung eines Spinnvlieslaminates mit einer Mehrzahl von übereinander angeordneten Spinnvlieslagen, wobei zumindest zwei und maximal vier Spinnvlieslagen gekräuselte Endlosfilamente aufweisen bzw. aus gekräuselten Endlosfilamenten bestehen, - insbesondere zur Herstellung eines Spinnvlieslaminates nach einem der Ansprüche 1 bis 14 und/oder zur Durchführung eines Verfahrens nach einem der Ansprüche 15 bis 23, - wobei die Vorrichtung eine Mehrzahl von hintereinander angeordneten Spinnbalken aufweist, wobei mit zumindest einem Teil der Spinnbalken - insbesondere mit zwei bis vier Spinnbalken - jeweils eine Spinnvlieslage mit/aus gekräuselten Multikomponentenfilamenten, insbesondere Bikomponentenfilamenten erzeugbar ist,
wobei einem Spinnbalken für jede Kunststoffkomponente der gekräuselten Filamente der Spinnvlieslage zumindest ein, vorzugsweise ein Extruder zugeordnet ist, mit dem die Kunststoffkomponente dem Spinnbalken bzw. der zugehörigen Spinnerette zuführbar ist
und wobei jedem Extruder zumindest eine Dosiereinrichtung zugeordnet ist, mit der die Menge und/oder die Zusammensetzung zumindest einer Kunststoffkomponente während des Betriebs der Vorrichtung online variierbar ist.

25. Vorrichtung nach Anspruch 24, wobei zumindest einem Extruder zumindest eine Dosiereinrichtung - insbesondere in Form einer Dosierschnecke - vorgeschaltet ist und wobei mit dieser Dosiereinrichtung die Menge der dem Extruder zugeführten Kunststoffkomponente bzw. die Menge des dem Extruder zugeführten Kunststoffes während des Betriebs der Vorrichtung (online) variierbar ist.

26. Vorrichtung nach einem der Ansprüche 24 oder 25, wobei zumindest einem Extruder zumindest eine Dosiereinrichtung - insbesondere in Form einer Spinnpumpe - nachgeschaltet ist und wobei mit dieser Dosiereinrichtung die Menge der dem Spinnbalken bzw. der Spinnerette zugeführten Kunststoffkomponente während des Betriebs der Vorrichtung (online) variierbar ist.

## Claims

1. A spunbond nonwoven laminate having a plurality of spunbond nonwoven layers arranged one above the other, wherein at least two and at most four spunbond nonwoven layers comprise crimped continuous filaments or consist of crimped continuous filaments, wherein the degree of crimping of the filaments is different in these spunbond nonwoven layers, wherein the crimped filaments of the spunbond nonwoven layers each have a crimp with at least three loops per centimetre of length,
wherein the crimped filaments of the spunbond nonwoven layers are configured as multicomponent filaments, in particular as bicomponent filaments, with at least one first plastic component and at least one second plastic component, wherein each of the two plastic components is present in the respective filament in a proportion of at least 10 wt. %, preferably at least 15 wt. %,
wherein the degree of crimping of a lower spunbond nonwoven layer of the spunbond nonwoven layers arranged one above the other is lower than the degree of crimping of at least one spunbond nonwoven layer arranged thereabove
wherein the second plastic component comprises or is a mixture or a blend of at least one second and at least one third plastic and wherein the fraction of the third plastic - relative to the entire filament - is less than 25 wt.%.

2. The spunbond nonwoven laminate according to claim 1, wherein
- the melt flow rate of the first component is 1.0 to 3 times, preferably 1.2 to 1.5 times greater than the melt flow rate of the second component,
- and/or wherein the molecular weight distribution (M_{w}/Mₙ or M_{z}/M_{w}) of the first component is narrower than the molecular weight distribution of the second component and/or the M_{w}/Mₙ value or the M_{z}/M_{w} value of the second component is at least 1.1 times greater than that of the first component,
- and/or wherein the difference in melting point between the first and the second component is at least 10°C.

3. The spunbond nonwoven laminate according to one of claims 1 or 2, wherein the difference between the weights per unit area of the spunbond nonwoven layers with crimped filaments is less than 25%, preferably less than 15% and more preferably less than 10%.

4. The spunbond nonwoven laminate according to one of claims 1 to 3, wherein the degree of crimping of the spunbond nonwoven layers arranged one above the other increases from bottom to top.

5. The spunbond nonwoven laminate according to one of claims 1 to 4, wherein the first plastic component comprises a first plastic or consists of at least one first plastic.

6. The spunbond nonwoven laminate according to claim 5, wherein the molecular weight distribution of the third plastic is broader than the molecular weight distribution of the first plastic and/or broader than the molecular weight distribution of the second plastic.

7. The spunbond nonwoven laminate according to one of claims 1 to 6, wherein the first plastic and/or the second plastic and/or the third plastic is a polyolefin or a homopolyolefin and/or a polyolefin copolymer.

8. The spunbond nonwoven laminate according to one of claims 1 to 7, wherein the first plastic and/or the second plastic and/or the third plastic is a polypropylene or a homopolypropylene and/or a polypropylene copolymer.

9. The spunbond nonwoven laminate according to one of claims 5 to 8, wherein the proportion of the third plastic relative to the second plastic component is 10 to 50 wt. %.

10. The spunbond nonwoven laminate according to one of claims 1 to 9, wherein the laminate is a laminate consolidated by calendering.

11. The spunbond nonwoven laminate according to one of claims 1 to 10, wherein the laminate has a thickness of 0.2 to 0.8 mm, preferably of 0.3 to 0.6 mm.

12. The spunbond nonwoven laminate according to one of claims 1 to 11, wherein the laminate has a specific thickness of 0.6 to 3.2 mm/100 gsm, preferably of 0.8 to 3 mm/100 gsm.

13. The spunbond nonwoven laminate according to one of claims 1 to 12, wherein the fineness of the crimped filaments in the laminate is 0.8 to 3 denier in all the spunbond nonwoven layers with crimped filaments.

14. The spunbond nonwoven laminate according to one of claims 1 to 13, wherein the weight per unit area of the laminate is between 10 and 50 g/m², preferably between 10 and 40 g/m².

15. A method for producing a laminate comprising a plurality of spunbond nonwoven layers arranged one above the other, in particular a laminate according to one of claims 1 to 14, wherein at least two and at most four spunbond nonwoven layers are produced with or from crimped continuous filaments, with the proviso that the degree of crimping of the continuous filaments in these spunbond nonwoven layers is different,
wherein the crimped filaments of the spunbond nonwoven layers are produced as multicomponent filaments, in particularly as bicomponent filaments, with a first plastic component and a second plastic component, wherein each of these two components is present in the respective filament in a proportion of at least 10 wt.%, preferably at least 15 wt.%,
wherein for the filaments of at least one spunbond nonwoven layer with crimped filaments, preferably a plurality of spunbond nonwoven layers with crimped filaments and more preferably all the spunbond nonwoven layers with crimped filaments, the proportion or the composition of the first plastic component and/or of the second plastic component is adjusted during execution of the method online in order to vary the degree of crimping,
and wherein the plastic components or the plastics for a spunbond nonwoven layer are each assigned a metering device and wherein the plastic component supply or the plastic supply is varied by at least one metering device in continuous operation online to vary the degree of crimping of the spunbond nonwoven layer.

16. The method according to claim 15,
- wherein the melt flow rate of the first component is 1.0 to 3 times, preferably 1.2 to 1.5 times greater than the melt flow rate of the second component
- and/or wherein the molecular weight distribution (M_{w}/Mₙ or M_{z}/M_{w}) of the first component is narrower than the molecular weight distribution of the second component and/or the M_{w}/Mₙ value or M_{z/}M_{w} value of the second component is at least 1.1 times greater than that of the first component
- and/or wherein difference in melting point between the first and the second component is at least 10°C.

17. The method according to one of claims 15 or 16, wherein the plastic component supply or the plastic supply by the at least one metering device is varied during ongoing operation (online) by varying the speed of the metering device.

18. The method according to claims 15 to 17, wherein the plastic components for a spunbond nonwoven layer are each assigned a spinning pump as metering device and wherein the plastic component supply by at least one spinning pump is varied during ongoing operation (online) in order to vary the degree of crimping of the spunbond nonwoven layer, in particular is varied by varying the speed of the spinning pump.

19. The method according to one of claims 15 to 18, wherein the first plastic component is produced from at least one first plastic, wherein the second plastic component is produced from at least one second plastic and at least one third plastic and wherein at least the proportion of the third plastic can be adjusted or is adjusted during execution of the method (online) in order to vary the degree of crimping of the respective spunbond nonwoven layer.

20. The method according to claim 19, wherein the proportion of the second and/or of the third plastic is varied during execution of the method (online).

21. The method according to claim 19 or 20, wherein the second plastic and/or the third plastic is a polyolefin, in particular a polypropylene.

22. The method according to one of claims 15 to 21, wherein the laminate is calendered in at least one calender.

23. The method according to one of claims 15 to 22, wherein the laminate is transferred from a foraminous depositing belt to a calender, wherein the speed of the depositing device or the foraminous depositing belt is lower than the peripheral speed of the calender rolls and wherein the peripheral speed of the calender rolls is at most 8%, preferably at most 5% greater than the speed of the depositing device or the foraminous depositing belt.

24. An apparatus for producing a spunbond nonwoven laminate having a plurality of spunbond nonwoven layers arranged one above the other, wherein at least two and at most four spunbond nonwoven layers comprise crimped continuous filaments or consist of crimped continuous filaments, in particular to produce a spunbond nonwoven laminate according to one of claims 1 to 14 and/or to carry out a method according to one of claims 15 to 23, wherein the apparatus comprises a plurality of consecutively arranged spinning beams, wherein a respective spunbond nonwoven layer comprising/consisting of crimped multicomponent filaments, in particular bicomponent filaments, can be produced with at least a portion of the spinning beams, in particular with two to four spinning beams,
wherein at least one, preferably one extruder is assigned to a spinning beam for each plastic component of the crimped multicomponent filaments of the spunbond nonwoven layer by means of which the plastic component can be fed to the spinning beam or the appurtenant spinneret,
and wherein at least one metering device is assigned to each extruder by means of which the quantity and/or the composition of at least one plastic component can be varied during operation of the apparatus (online).

25. The apparatus according to claim 24, wherein at least one metering device, in particular in the form of a metering screw, is provided upstream of at least one extruder and wherein the quantity of the plastic component supplied to the extruder or the quantity of the plastic supplied to the extruder can be varied by means of this metering device during operation of the device (online).

26. The apparatus according to one of claims 24 or 25, wherein at least one metering device, in particular in the form of a metering screw, is provided downstream of at least one extruder and wherein the quantity of the plastic component supplied to the spinning beam or the spinneret can be varied by means of this metering device during operation of the device (online).

## Revendications

1. Laminé de non-tissé filé-lié comprenant une pluralité de couches de non-tissé filé-lié superposées, au moins deux et au maximum quatre couches de non-tissé filé-lié comportant des filaments continus crêpés ou étant constituées de filaments continus crêpés, le taux de crêpage des filaments étant différent dans lesdites couches de non-tissé filé-lié, les filaments crêpés des couches de non-tissé filé-lié comportant respectivement un crêpage à au moins 3 boucles (loops) par centimètre de leur longueur,
les filaments crêpés des couches de non-tissé filé-lié étant conçus sous la forme de filaments multicomposants, notamment de filaments bicomposants, avec au moins un premier composant en matière plastique et au moins un deuxième composant en matière plastique, chacun des deux composants en matière plastique étant présent à raison d'au moins 10 % en poids, de préférence d'au moins 15 % en poids dans le filament concerné,
le taux de crêpage d'une couche inférieure de non-tissé filé-lié des couches de non-tissé filé-lié superposées étant inférieur au taux de crêpage d'au moins une couche de non-tissé filé-lié qui lui est superposée,
le deuxième composant en matière plastique comportant, respectivement étant un mélange ou un mariage d'au moins une deuxième matière plastique et d'au moins une troisième matière plastique et la part de la troisième matière plastique (rapportée à l'ensemble du filament) étant inférieure à 25 % en poids.

2. Laminé de non-tissé filé-lié selon la revendication 1,
- le débit en fusion du premier composant étant de 1,0 à 3 fois, de préférence de 1,2 à 1,5 fois supérieur au débit en fusion du deuxième composant,
- et/ou la distribution des poids moléculaires (M_{w}/Mₙ ou M_{z}/M_{w}) du premier composant étant plus étroite que la distribution des poids moléculaires du deuxième composant et/ou la valeur M_{w}/Mₙ ou valeur M_{z}/M_{w} du deuxième composant étant au moins 1,1 fois supérieure à celle du premier composant
- et/ou la différence de point de fusion entre le premier et le deuxième composant étant d'au moins 10 °C.

3. Laminé de non-tissé filé-lié selon l'une quelconque des revendications 1 ou 2, la différence entre les grammages des couches de non-tissé filé-lié pourvues de filaments crêpés étant inférieure à 25%, de préférence inférieure à 15% et de préférence inférieure à 10%.

4. Laminé de non-tissé filé-lié selon l'une quelconque des revendications 1 à 3, le taux de crêpage des couches de non-tissé filé-lié superposées croissant du bas vers le haut.

5. Laminé de non-tissé filé-lié selon l'une quelconque des revendications 1 à 4, le premier composant en matière plastique comportant une première matière plastique ou étant constitué d'au moins une première matière plastique.

6. Laminé de non-tissé filé-lié selon la revendication 5, la distribution des poids moléculaires de la troisième matière plastique étant plus large que la distribution des poids moléculaires de la première matière plastique et/ou plus large que la distribution des poids moléculaires de la deuxième matière plastique.

7. Laminé de non-tissé filé-lié selon l'une quelconque des revendications 1 à 6, la première matière plastique et/ou la deuxième matière plastique et/ou la troisième matière plastique étant une polyoléfine ou une homo-polyoléfine et/ou un copolymère de polyoléfine.

8. Laminé de non-tissé filé-lié selon l'une quelconque des revendications 1 à 7, la première matière plastique et/ou la deuxième matière plastique et/ou la troisième matière plastique étant un polypropylène ou un homo-polypropylène et/ou un copolymère de polypropylène.

9. Laminé de non-tissé filé-lié selon l'une quelconque des revendications 5 à 8, la part de la troisième matière plastique (rapportée au deuxième composant en matière plastique) étant de 10 à 50 % en poids.

10. Laminé de non-tissé filé-lié selon l'une quelconque des revendications 1 à 9, le laminé étant un laminé consolidé par calandrage.

11. Laminé de non-tissé filé-lié selon l'une quelconque des revendications 1 à 10, le laminé présentant une épaisseur de 0,2 à 0,8 mm, de préférence de 0,3 à 0,6 mm.

12. Laminé de non-tissé filé-lié selon l'une quelconque des revendications 1 à 11, le laminé présentant une épaisseur spécifique de 0,6 à 3,2 mm/100gsm, de préférence de 0,8 à 3 mm/100gsm.

13. Laminé de non-tissé filé-lié selon l'une quelconque des revendications 1 à 12, le denier des filaments crêpés dans le laminé étant de0,8 à 3 deniers dans toutes les couches de non-tissé filé-lié à filaments crêpés.

14. Laminé de non-tissé filé-lié selon l'une quelconque des revendications 1 à 13, le grammage du laminé étant compris entre 10 et 50 g/m², de préférence entre 10 et 40 g/m².

15. Procédé, destiné à créer un laminé comprenant une pluralité de couches de non-tissé filé-lié superposées (notamment un laminé selon l'une quelconque des revendications 1 à 14), au moins deux et au maximum quatre couches de non-tissé filé-lié comportant des ou constituées de filaments continus crêpés étant créées avec le critère que le taux de crêpage des filaments continus soit différent dans lesdites couches de non-tissé filé-lié,
les filaments crêpés des couches de non-tissé filé-lié étant fabriqués sous la forme de filaments multicomposants, notamment de filaments bicomposants, avec au moins un premier composant en matière plastique et au moins un deuxième composant en matière plastique, chacun des deux composants en matière plastique étant présent à raison d'au moins 10 % en poids, de préférence d'au moins 15 % en poids dans le filament concerné,
pour les filaments d'au moins une couche de non-tissé filé-lié avec des filaments crêpés, de préférence de plusieurs couches de non-tissé filé-lié avec des filaments crêpés et de manière préférentielle, de toutes les couches de non-tissé filé-lié avec des filaments crêpés, la part ou la composition du premier composant en matière plastique et/ou du deuxième composant en matière plastique étant réglée pendant le déroulement de procédé (en ligne), pour faire varier le taux de crêpage,
et aux composants en matière plastique ou aux matières plastiques pour une couche de non-tissé filé-lié étant associé respectivement un système de dosage et l'alimentation des composants en matière plastique ou l'alimentation de la matière plastique par au moins un système de dosage étant modifiée en ligne en cours de procédé, pour faire varier les taux de crêpage des couches de non-tissé filé-lié.

16. Procédé selon la revendication 15,
- le débit en fusion du premier composant étant de 1,0 à 3 fois, de préférence de 1,2 à 1,5 fois supérieur au débit en fusion du deuxième composant,
- et/ou la distribution des poids moléculaires (M_{w}/Mₙ ou M_{z}/M_{w}) du premier composant étant plus étroite que la distribution des poids moléculaires du deuxième composant et/ou la valeur M_{w}/Mₙ ou valeur M_{z}/M_{w} du deuxième composant étant au moins 1,1 fois supérieure à celle du premier composant
- et/ou la différence de point de fusion entre le premier et le deuxième composant étant d'au moins 10 °C.

17. Procédé selon l'une quelconque des revendications 15 ou 16, l'alimentation des composants en matière plastique ou l'alimentation de matière plastique par l'au moins un système de dosage étant modifiée en cours de procédé (en ligne), par variation du régime du système de dosage.

18. Procédé selon la revendication 15 à 17, aux composants en matière plastique pour une couche de non-tissé filé-lié étant respectivement associée une pompe de filage, en tant que système de dosage, et l'alimentation des composants en matière plastique par au moins une pompe de filage en cours de procédé étant modifiée (en ligne), pour faire varier le taux de crêpage de la couche de non-tissé filé-lié, notamment en faisant varier le régime de la pompe de filage.

19. Procédé selon l'une quelconque des revendications 15 à 18, le premier composant en matière plastique étant créé en au moins einem première matière plastique, le deuxième composant en matière plastique étant créé en au moins une deuxième matière plastique et au moins une troisième matière plastique étant créée et au moins la part de la troisième matière plastique étant réglable ou réglée en cours de procédé (en ligne), pour faire varier le taux de crêpage de la couche de non-tissé filé-lié respective.

20. Procédé selon la revendication 19, lors duquel on fait varier la part de la deuxième et/ou de la troisième matière plastique en cours de procédé (en ligne).

21. Procédé selon l'une quelconque des revendications 19 ou 20, la deuxième matière plastique et/ou la troisième matière plastique étant une polyoléfine, notamment un polypropylène.

22. Procédé selon l'une quelconque des revendications 15 à 21, le laminé étant calandré dans au moins une calandre.

23. Procédé selon l'une quelconque des revendications 15 à 22, le laminé étant transféré à une calandre à partir d'un dispositif de dépose, de préférence d'une toile perforée de dépose, la vitesse du dispositif de dépose ou de la toile perforée de dépose étant inférieure à la vitesse superficielle des cylindres de calandrage et la vitesse superficielle des cylindres de calandrage étant supérieure d'un maximum de 8%, de préférence d'un maximum de 5% à la vitesse du dispositif de dépose ou de la toile perforée de dépose.

24. Dispositif, destiné à la fabrication d'un laminé de non-tissé filé-lié, comprenant une pluralité de couches de non-tissé filé-lié superposées, au moins deux et au maximum quatre couches de non-tissé filé-lié comportant des filaments continus crêpés ou étant constitués de filaments continus crêpés, (notamment destiné à la fabrication d'un laminé de non-tissé filé-liée selon l'une quelconque des revendications 1 à 14 et/ou à la réalisation d'un procédé selon l'une quelconque des revendications 15 à 23), le dispositif comportant une pluralité de rampes de filature, placées les unes derrière les autres, avec au moins une partie des barres de filage (notamment avec de deux à quatre barres de filage) pouvant être créée respectivement une couche de non-tissé filé-lié comprenant des/constituée de filaments multicomposants, notamment filaments bicomposants crêpés,
à une barre de filage pour chaque composant en matière plastique des filaments crêpés de la couche de non-tissé filé-lié étant associée au moins une, de préférence une extrudeuse, à l'aide de laquelle le composant en matière plastique peut être alimenté vers la barre de filage ou la fileuse correspondante,
et à chaque extrudeuse étant associé au moins un système de dosage, à l'aide duquel on peut faire varier en ligne la quantité et/ou la composition d'au moins un composant en matière plastique, en cours de fonctionnement du dispositif.

25. Dispositif selon la revendication 24, en amont d'au moins une extrudeuse étant monté au moins un système de dosage (notamment sous la forme d'une vis de dosage) et à l'aide dudit système de dosage, la quantité du composant en matière plastique alimenté vers l'extrudeuse ou la quantité de la matière plastique alimentée vers l'extrudeuse pouvant être variée (en ligne) en cours de fonctionnement du dispositif.

26. Dispositif selon l'une quelconque des revendications 24 ou 25, en aval d'au moins une extrudeuse étant monté au moins un système de dosage (notamment sous la forme d'une pompe de filage) et à l'aide dudit système de dosage, la quantité du composant en matière plastique alimenté vers la barre de filage ou la fileuse pouvant être variée (en ligne) en cours de fonctionnement du dispositif.
